# EUROPÄISCHE PATENTANMELDUNG

(11) **EP 4 729 899 A2**
(43) Veröffentlichungstag der Anmeldung: **22.04.2026**
(21) Anmeldenummer: 26156727.5
(22) Anmeldetag: 06.03.2023
(51) Int. Cl.: G01J 3/12

(54) **SYSTEM UND VERFAHREN ZUR ANALYSE VON ZÜNDWIRKSAMEN ERSCHEINUNGEN**

(30) Priorität: 07.03.2022 DE 102022105306
(62) Teilanmeldung aus: 23709976.7
(71) Anmelder: Fagus-GreCon Greten GmbH & Co. KG, 31061 Alfeld (DE)
(72) Erfinder: Die Erfindernennung liegt noch nicht vor
(74) Vertreter: Patentanwälte Bauer Vorberg Kayser

(57) **Zusammenfassung**

Die vorliegende Erfindung betrifft ein System und Verfahren zur Analyse von in einem medienbeladenen oder mediendurchströmten Reservoir (2) auftretenden zündwirksamen Erscheinungen (1), wobei mit einem solchen System bzw. Verfahren die Erkennung und Gefahrenbewertung zündwirksamer Erscheinungen (1) in Bezug auf ein bestimmtes Medium verbessert werden kann.

## Beschreibung

Die vorliegende Erfindung betrifft ein System und Verfahren zur Analyse von in einem medienbeladenen oder mediendurchströmten Reservoir auftretenden zündwirksamen Erscheinungen. Das mit der Erfindung vorgeschlagene System und Verfahren macht sich dabei eine Analyse von Absorptionsphänomenen zu eigen, die in Folge einer Strahlungsemission durch zündwirksame Erscheinungen erfolgen können.

Medienbeladene oder mediendurchströmte Reservoirs kommen in unterschiedlichsten Industriesektoren zum Einsatz, beispielsweise zur Beförderung, Lagerung, Zwischenlagerung oder zur Verarbeitung von Medien.

Ein "Medium" kann einen oder mehrere Bestandteile umfassen. Unter einem "Medium" können vorliegend insbesondere Feststoffe, Feststoffpartikel, Staubpartikel etc. verstanden werden. Werden derartige Stoffe bzw. Partikel bewegt, insbesondere bei im Vergleich zum Normaldruck erhöhten oder verringerten Druckwerten, steigt - bei Vorliegen einer zündwirksamen Erscheinung - das Risiko für das Auftreten und damit auch die Gefahr einer Flammenbildung, eines Feuers oder einer Explosion (z.B. einer Staubexplosion). Gleiches kann für eine statische (nicht aktiv bewegte) Lagerung von Medien (z. B. unter Druck) in einem Reservoir gelten. Denn auch bei "Beladung" eines Reservoirs mit einem Medium, können innerhalb des Mediums (lokale) Bewegungen erzeugt werden (z. B. durch Druckschwankungen, Temperaturgefälle oder aufgrund von bestimmten Materialeigenschaften), die in Verbindung mit einer zündwirksamen Erscheinung zu einer erhöhten Entflammungs- bzw. Explosionsgefahr führen können. Auch können Situationen auftreten, bei denen ein Glimmnest in eine Staubschicht fällt oder in ein Silo transportiert wird. Insbesondere in Verbindung mit Luftsauerstoff können sich in Bezug auf ein potenzielles Entflammungs- oder Explosionsrisiko gefährliche Stoffgemische bilden. Gleichsam können auch Fluide, wie Gase oder Flüssigkeiten als "Medium" im Kontext der vorliegenden Erfindung verstanden werden. Auch pastöse oder zähflüssige Medien (z. B. Kunststoff in (teil-)geschmolzener bzw. aufgeweichtem oder verformbarem Zustand) sind mögliche Medien.

Unter einem "medienbeladenen" Reservoir kann beispielsweise ein mit einer Feststoffschüttung, einer Partikelschüttung oder einer Granulatschüttung beaufschlagtes Behältnis (z.B. ein Silo oder eine Lagerkammer) verstanden werden, in welchem das Medium ohne aktiven Transport (d.h. ohne aktive Bewegungsinduktion) vorgehalten ist.

Unter einem "mediendurchströmten" Reservoir kann ein (zumindest teilweise) nach außen geschlossener Förderweg, eine Förderleitung, ein Förderband, ein Fallschacht, ein Filter, ein Filtersystem oder ein Förderkanal verstanden werden, in welchem/welcher eine Medienströmung eines Mediums vorliegt und ein Medium (z.B. mechanisch, pneumatisch oder anderweitig) transportiert wird. In einem mediendurchströmten Reservoir liegt das Medium also vornehmlich in einem bewegten Zustand vor. In Abhängigkeit von der Art des Mediums, der Strömungsgeschwindigkeit des Mediums, sowie der Form und Größe des Reservoirs, können aufgrund von Medienbewegungen beispielsweise Verwirbelungen (insbesondere bei turbulenter Strömung), lokale Partikelakkumulationen, Verpuffungen etc. entstehen, was insgesamt zu einer erhöhten Reibung zwischen dem Medium zugehörigen Partikeln untereinander, sowie zwischen den Partikeln und Wandungen des Reservoirs führen kann. Damit assoziiert sein kann eine erhöhte Entwicklung von Reibungswärme. Eine erhöhte Entflammungs- bzw. Explosionsgefahr kann somit von durch die Medien-Bewegung erzeugten Zündinitialen (als zündwirksame Erscheinungen) oder durch anderweitige zündwirksame Erscheinungen entstehen.

Eine derartige Medien-Lagerung oder Medien-Bewegung tritt besonders häufig auf bei Herstellungs-, Verarbeitungs- oder Transportprozessen in der holzverarbeitenden Industrie, der Textilindustrie, der Möbelindustrie, der Kohleindustrie, der Papierindustrie, der Kunststoffindustrie, der Metallindustrie, der Nahrungsmittelindustrie, der Genussmittelindustrie (insbesondere Tabakindustrie), der Futtermittelindustrie, der Lederindustrie, der Gummiindustrie, der chemischen Industrie sowie bei der Schwarzpulver- und Feuermittelindustrie. Häufig finden sich in den genannten Industriefeldern Anlagen zum Zermahlen oder Zerkleinern von Feststoffen oder Feststoffgemischen, Trocknungsanlagen, Kühlanlagen, Verpress-Anlagen, allesamt mit ihren pneumatischen oder mechanischen Transport- und Absaugwegen. Auch Staubabsaugungen können als Medien-Bewegung verstanden werden.

Den vorangehend erwähnten Anwendungsgebieten bzw. Applikationsbeispielen ist eine erhöhte Feuer-, Brand- oder Explosionsgefahr durch das Zusammenwirken von zündwirksamen Erscheinungen und dem in einem zugehörigen Reservoir enthaltenen Medium gemein. Diese kann gegeben sein, wenn in einem Reservoir feine Partikel aus brennbarem (z.B. organischem) Material in hoher Partikeldichte vorliegen oder bewegt werden. Kommt es dann in einem mit dem Reservoir verbundenen Anlagen- oder Maschinenteil oder in dem Reservoir selbst, zur Entstehung einer zündwirksamen Erscheinung, so kann dies zu der genannten Funkenbildung samt einer damit einhergehenden Entzündung des Mediums (bis hin zur Explosion) führen. Verstärkt werden kann dies durch die o.g. bewegungsinduzierten Verwirbelungs-, Verpuffungs- und Erwärmungseffekte der Medienpartikel. Staubexplosionen können beispielsweise auftreten, wenn zündwirksame Erscheinungen (als Zündquelle), ein geeigneter Brennstoff (z. B. das genannte Medium in Staubform) und Sauerstoff in ausreichendem Maße vorliegen. Zündwirksame Erscheinungen können beispielsweise aus heißen Oberflächen, Flammen und heißen Gasen, mechanisch erzeugten Funken, elektrostatischen Entladungen, Glimmnestern, elektrischen Anlagen oder brennenden Metallpartikeln resultieren.

Um zündwirksame Erscheinungen frühzeitig zu erkennen und damit zu einer effektiven Feuer-, Brand, oder Explosionsprävention beitragen zu können, werden messtechnische Vorrichtungen zur (optischen) Erfassung derartiger zündwirksamer Erscheinungen eingesetzt, die im Fachjargon auch als Funkensensoren oder Funkenmelder bezeichnet werden. Funkenmelder können dabei in anlagenintegrierte Alarm- oder Löschsysteme eingebettet, oder aber entkoppelt von einem Alarm- oder Löschsystem eingesetzt werden, beispielsweise ausschließlich zur Überwachung eines mediendurchströmten oder medienbeladenen Reservoirs.

Mittels eines Funkenmelders können zündwirksame Erscheinungen zwar frühzeitig erkannt, jedoch damit allein eine potenziell daraus hervorgehende Gefahrsituation (z.B. ein Brand oder einer Explosion) nicht verhindert werden. Eine effektive Verhinderung kann nur dann erfolgen, wenn von einem Funkenmelder erkannte zündwirksame Erscheinungen in Bezug auf die Wahrscheinlichkeit zur Auslösung einer tatsächlichen Gefahrsituation (d.h. eines Brandes oder einer Explosion), d. h. hinsichtlich ihrer potenziellen Brandauslösungsgefahr oder Explosionsauslösungsgefahr, bewertet werden, sodass im Anschluss daran - im Bedarfsfall - weitere Schritte zur Gefahrbeseitigung veranlasst werden können. Schließlich muss - sofern ein selbstständiges zum Erliegen kommen der zündwirksamen Erscheinungen nicht zu erwarten ist - zur wirkungsvollen Bekämpfung bzw. Verhinderung eines Brandes oder einer Explosion, ein Löschprozess in Gang gesetzt oder eine Anlagenabschaltung vorgenommen werden. Ferner ist es erforderlich in der Nähe einer solchen Anlage befindliche Personen über eine solche Gefahrensituation in Kenntnis zu setzen, so dass sich diese in Sicherheit bringen können. Dazu werden Funkenmelder häufig mit geeigneten Alarmsystemen, Löschsystemen oder Abschaltsystemen gekoppelt.

Zur Observation von zündwirksamen Erscheinungen kann eine geeignete Messanordnung (z. B. als Bestandteil eines Funkenmelders) derart in eine Wand eines Reservoirs eingebracht oder in Nähe einer strahlungsdurchlässigen Scheibe eines Reservoirs (z. B. einer Rohrleitung oder eines Kanals) angeordnet werden, dass zündwirksame Erscheinungen innerhalb eines Volumenelements des Reservoirs (also einem Observationsraum) - z. B. optisch - mit Hilfe der Messanordnung erfasst werden können. Unter einer optischen Erfassung ist die Detektion von seitens der zündwirksamen Erscheinungen emittierter elektromagnetischer Strahlung zu verstehen.

Wird eine zündwirksame Erscheinung erkannt, kann dies z. B. an eine Löschzentrale weitergegeben werden, woraufhin unter Einsatz einer Löschautomatik eine Löscheinrichtung in dem Reservoir aktiviert werden kann. Gleichsam kann auch eine alleinige Alarmauslösung zum manuellen Löschen des Brand- oder Explosionsherds beitragen. Auch eine Anlagenabschaltung kann eine Folge der Erkennung einer zündwirksamen Erscheinung sein.

Aus der DE 20 2013 006 142 U1 ist ein Melder zum Erkennen von Funken-, Brand- und Glutnestern bekannt, der Lichtblitze im sichtbaren Spektralbereich oder alternativ thermische Strahlung im infraroten Spektralbereich detektieren kann.

Hierzu wird der Melder mit einem eine lichtdurchlässige Scheibe aufweisenden Stutzen in eine Rohrwandung eingesetzt. Die zu detektierende elektromagnetische Strahlung wird über einen unter der Scheibe angeordneten Lichtleiter auf ein fotosensibles Element des Melders geleitet. Im Anschluss kann eine Auswertung der detektierten Signale erfolgen.

Da derartige Scheiben jedoch verschmutzen und somit eine zuverlässige Erfassung der Funken-, Brand- und Glutnester beeinträchtigen können, wurden im Stand der Technik Anordnungen und Verfahren beschrieben, mit welchen eine solche Verschmutzung frühzeitig erkannt werden kann.

So ist aus der WO 03/012381 A1 ein Verfahren bekannt, bei dem zwei diametral gegenüberliegend in eine Rohrwandung eingesetzte Melder vorgesehen sind. Zur Überprüfung der Funktionssicherheit der Melder wird von einem Sender des einen Melders ein Testsignal abgestrahlt, das, zumindest teilweise, von einem Empfänger des gegenüberliegenden Melders aufgefangen wird. Hieraus können Rückschlüsse in Bezug auf die Funktionssicherheit des Melders gezogen werden. Nachteilig ist jedoch die Notwendigkeit der diametral gegenüberliegenden Anordnung gleich zweier Funkenmelder. Entsprechend ist die Bereitstellung eines solchen Systems mit erhöhten Kosten und einem erhöhten Montageaufwand verbunden.

Jene der Anmelderin der vorliegenden Erfindung zuzuordnende Publikation DE 10 2017 005 386 A1 ist auf ein Verfahren zur Überwachung eines Materialstroms in einer Rohrleitung gerichtet, welches auf wenigstens einen Melder mit einer lichtdurchlässigen Scheibe zurückgreift, wobei unter der lichtdurchlässigen Scheibe wenigstens ein lichtempfindlicher Sensor angeordnet ist. Durch den Melder kann eine Erkennung von Funken-, Brand- oder Glutnestern in wenigstens einem ersten Spektralbereich und eine Erkennung einer Verschmutzung der Scheibe in einem zweiten, von dem ersten beabstandeten Spektralbereich geringerer Wellenlänge erfolgen.

Nebst der Gewährleistung einer grundsätzlichen Funktionstüchtigkeit eines Funkenmelders, ist es für die vorstehend genannten Anwendungen von besonderer Bedeutung, eine ausreichende Funktionssicherheit und Messpräzision sicherzustellen. Von besonderem Interesse ist es dabei, Fehlalarme möglichst in Gänze zu vermeiden und eine situations- bzw. medienangepasste Erkennung zündwirksamer Erscheinungen zu ermöglichen.

Die Vermeidung von Fehlalarmen ist von enormer Bedeutung, da mit einem Alarm häufig die Abschaltung von Maschinen, Anlagen oder gar einer ganzen Produktionshalle einhergehen kann. Ferner können Maschinen oder Anlagen durch den Einsatz von Löschmitteln beschädigt werden. Handelt es sich um einen Fehlalarm, können dadurch unnötige Kosten, Schäden etc. entstehen.

Wie bereits einleitend erwähnt, kann eine in dem Reservoir zu einem bestimmten Zeitpunkt vorliegende Medienpartikeldichte, die Art und Beschaffenheit des Mediums, oder ein Umgebungsparameter (z.B. die Temperatur oder der Druck) die Wahrscheinlichkeit für die Erzeugung zündwirksamer Erscheinungen (und eines möglichen daraus hervorgehenden Brand- oder Explosionsereignisses) beeinflussen. Derartige situations- oder medienbezogene Parameter bei der Gefahrenbewertung von mit einem Funkenmelder erhaltenen Messdaten zu berücksichtigen, ist von großem Interesse. Denn nicht jede mit einem Funkenmelder detektierte zündwirksame Erscheinung begründet zugleich ein Risiko für eine Brand- oder Explosionsentstehung. So kann es bei bestimmten Medien üblich oder gar erwünscht sein, dass zündwirksame Erscheinungen - bis zu einem bestimmten Maße - in einem von dem Medium durchströmten oder mit diesem beladenen Reservoir auftreten.

Ferner besteht bei Funkenmeldern bzw. zugehörigen Alarmsystemen ein besonderer Bedarf an einer situations- und medienangepassten Performance-Einstellung der Funkenmelder, einerseits um deren Messpräzision zu erhöhen, andererseits um Blindfleck-Messungen zu vermeiden, d.h. zu vermeiden, dass in bestimmten Wellenlängenbereichen auftretende feuerartige Erscheinungen aufgrund einer minderen Messempfindlichkeit in einem bestimmten spektralen Bereich nicht erfasst werden können.

Ein wesentlicher Einflussfaktor, der die Messgenauigkeit (und damit die Zuverlässigkeit) bei der Erkennung zündwirksamer Erscheinungen mittels Funkenmeldern beeinträchtigen kann, ist eine mögliche Absorption der seitens der zündwirksamen Erscheinungen emittierten (elektromagnetischen) Strahlung durch ein in dem Reservoir befindliches Absorptionsmedium. Das Absorptionsmedium kann beispielsweise durch jenes durch das Reservoir strömende oder dieses beladende Medium gebildet sein (z. B. in Form von organischen Stäuben). Angenommen eine zur Erfassung der von den zündwirksamen Erscheinungen emittierten Strahlung geeignete Messanordnung ist positionsfest relativ zu den in dem Reservoir auftretenden zündwirksamen Erscheinungen angeordnet (die Erscheinungen können hingegen einer Bewegung relativ zur Messanordnung unterliegen). Die seitens der zündwirksamen Erscheinungen emittierte elektromagnetische Strahlung wird nach dem Lambert-Beerschen Gesetz attenuiert (abgeschwächt). Die Absorption ist unter anderem von dem die Signalintensität attenuierenden Medium (also vom Material) sowie von dessen Konzentration im Reservoir (insbesondere im Observationsraum der Messanordnung, also im Strahlungsweg zwischen zündwirksamer Erscheinung und Messanordnung) abhängig. Da derartige Absorptionsphänomene zudem wellenlängenabhängig sind, können diese mit klassischen Funkenmeldern (ohne intelligente, wellenlängenbezogene Messempfindlichkeitsanpassung) häufig nicht zuverlässig erfasst bzw. bei der Beurteilung von Messergebnissen mit einbezogen werden. Auch äußere Parameter wie die Größe und Form des Reservoirs, Umgebungsbedingungen wie Temperatur, Druck etc., oder Betriebsparameter einer das Reservoir enthaltenen übergeordneten Anlage oder Maschine können die Absorption beeinflussen. Ohne Berücksichtigung derartiger Absorptionsphänomene können zündwirksame Erscheinungen ggf. nicht zuverlässig erfasst werden.

Unter dem erwähnten Absorptionsmedium sind an dieser Stelle keine Verschmutzungspartikel zu verstehen, die beispielsweise am Funkenmelder oder der beim erfindungsgemäßen System zum Einsatz kommenden Messanordnung anhaften oder diese verschmutzen können. Zur Differenzierung zwischen derartigen Verschmutzungen und dem im Reservoir befindlichen Absorptionsmedium (dessen Einfluss erfindungsgemäß berücksichtigt wird) können Maßnahmen ergriffen werden, die jedoch nicht Gegenstand der vorliegenden Erfindung sind. Etwaige Störeinflüsse durch Verschmutzungen werden vermieden. Derartige Maßnahmen können mechanischer oder messtechnischer Natur sein.

Es besteht somit ein wachsender Bedarf, in medienbeladenen oder mediendurchströmten Reservoirs (mit der Gefahr der Entstehung von zündwirksamen Erscheinungen) eine zuverlässige Erkennung zündwirksamer Erscheinungen samt zuverlässiger Gefahreneinschätzung bereitzustellen, welche das Auftreten von Absorptionsphänomenen berücksichtigt. Gleichsam besteht ein wachsender Bedarf für Betreiber von Anlagen oder Maschinen (umfassend ein Reservoir, das mit einem Medium beladen oder von diesem durchströmt werden kann) schon vor Inbetriebnahme der Anlage/Maschine oder vor einem Wechsel des Mediums jenen in Absorptionsphänomenen begründeten Gefahren einer unzuverlässigen Erkennung bzw. Gefahreneinschätzung zündwirksamer Erscheinungen vorzubeugen, dies ggf. schon im Anlagen-/Maschinen-Planungsstatus.

Entsprechend liegt der vorliegenden Erfindung die Aufgabe zugrunde, ein System und ein Verfahren zur Analyse von in einem medienbeladenen oder mediendurchströmten Reservoir auftretenden zündwirksamen Erscheinungen bereitzustellen, womit die Erkennung und Gefahrenbewertung zündwirksamer Erscheinungen in Bezug auf ein bestimmtes Medium verbessert wird.

Zur Lösung dieser Aufgabe wird ein System mit den Merkmalen des Anspruchs 1, sowie ein Verfahren mit den Merkmalen des Anspruchs 20 vorgeschlagen.

Es ist darauf hinzuweisen, dass die in den Ansprüchen einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich. Ausdrücklich sei darauf hingewiesen, dass jene im Zusammenhang des mit der Erfindung vorgeschlagenen Systems beschriebenen Merkmale auch mögliche Ausgestaltungen eines mit der Erfindung vorgeschlagenen Verfahrens sein können und umgekehrt.

Es sei ferner darauf hingewiesen, dass eine hierin verwendete, zwischen zwei Merkmalen stehende und diese miteinander verknüpfende Konjunktion "und/oder" stets so auszulegen ist, dass in einer ersten Ausgestaltung des erfindungsgemäßen Gegenstands lediglich das erste Merkmal vorhanden sein kann, in einer zweiten Ausgestaltung lediglich das zweite Merkmal vorhanden sein kann und in einer dritten Ausgestaltung sowohl das erste als auch das zweite Merkmal vorhanden sein können.

Die Erfindung betrifft zunächst ein System zur Analyse von in einem medienbeladenen oder mediendurchströmten Reservoir auftretenden zündwirksamen Erscheinungen, umfassend
- einen Observationsraum, in welchem eine Absorption von seitens einer zündwirksamen Erscheinung oder einer die zündwirksame Erscheinung nachstellenden Strahlungsquelle emittierter elektromagnetischer Strahlung durch ein Absorptionsmedium beobachtbar ist,
- eine Messanordnung, welche dazu ausgebildet und derart angeordnet ist,
   ∘ zumindest einen ersten Absorptionswert betreffend die im Observationsraum durch das Absorptionsmedium absorbierte elektromagnetische Strahlung in einem ersten charakteristischen Wellenlängenbereich zu erfassen,
   ∘ und zumindest einen zweiten Absorptionswert betreffend die im Observationsraum durch das Absorptionsmedium absorbierte elektromagnetische Strahlung in einem zweiten charakteristischen Wellenlängenbereich zu erfassen,
   wobei der Absorption in dem ersten charakteristischen Wellenlängenbereich ein erstes Absorptions-Charakteristikum zugrunde liegt, und wobei der Absorption in dem zweiten charakteristischen Wellenlängenbereich ein zweites Absorptions-Charakteristikum zugrunde liegt,
- ein Prüfmittel, welches dazu eingerichtet ist, aus dem zumindest einen ersten Absorptionswert und dem zumindest einen zweiten Absorptionswert ein Absorptionsmaß zu ermitteln.

Wie erwähnt, betrifft die vorliegende Erfindung ein System zur Analyse von in einem medienbeladenen oder mediendurchströmten Reservoir auftretenden zündwirksamen Erscheinungen. Zum Verständnis der Begrifflichkeiten "medienbeladen", "mediendurchströmt", "Medium", "Reservoir" und "zündwirksame Erscheinung" sei auf die vorangehenden Ausführungen verwiesen, die für das erfindungsgemäße System sowie Verfahren unmittelbar gelten.

Nachfolgend aufgeführte Ausführungen betreffend diese Begrifflichkeiten ergänzen/erweitern die vorstehenden Angaben.

Das erfindungsgemäße System umfasst zunächst einen Observationsraum, in welchem eine Absorption von seitens einer zündwirksamen Erscheinung emittierter elektromagnetischer Strahlung durch ein Absorptionsmedium beobachtbar ist. Der Observationsraum kann ein abgeschlossener - zum Reservoir - separater Raum sein, gleichsam aber auch ein innerhalb des Reservoirs angeordnetes (nicht abgeschlossenes) dreidimensionales Volumenelement. Somit kann auch ein Abschnitt oder Bereich des Reservoirs als Observationsraum verstanden werden. Ein innerhalb des Reservoirs angeordneter Observationsraum kann von außerhalb des Reservoirs optisch beobachtet werden, z. B. durch ein für Strahlung bestimmter Wellenlängen transparentes Observationsfenster, das in eine Wandung des Reservoirs integriert sein kann. Auch bei Vorsehen eines vom Reservoir separaten Observationsraum (der beispielsweise im Sinne einer Observationsbox ausgebildet sein kann), kann der Observationsraum durch ein in eine Wandung des Observationsraums integriertes Observationsfenster optisch beobachtet werden. In beiden Fällen (Observationsraum = Teil des Reservoirs oder Observationsraum = extern zum Reservoir) kann eine Messanordnung samt (optischen) Messeinheiten derart in eine Wandung des Reservoirs oder Observationsraums integriert sein, dass der Observationsraum optisch mit der Messanordnung beobachtbar ist. Der Observationsraum ist mit dem Medium (welches zugleich das Absorptionsmedium sein kann, aber nicht muss) und/oder dem Absorptionsmedium beladen oder von diesem durchströmt. Der Observationsraum ist nicht auf eine bestimmte Geometrie oder Form beschränkt.

Unter einem "System" kann ein Gegenstand verstanden werden, der sich aus einer oder mehreren körperlichen und/oder nicht körperlichen Komponenten zusammensetzen kann. Ein System kann mechanische, elektrische, messtechnische, datenverarbeitungstechnische, datenkommunikationstechnische oder anderweitige Funktionen aufweisen. Ferner kann ein System ein Gehäuse umfassen, in welchem dem System zugehörige Komponenten angeordnet sein können. Auch einzelne (separate) Systemkomponenten können in jeweiligen (separaten) Gehäusen angeordnet sein. Systemkomponenten können dabei mechanisch, signaltechnisch und/oder elektrisch miteinander verbunden sein.

Auch Recheneinheiten, Server, Kommunikationsmittel, Software, Rechenroutinen, Algorithmen, Kommunikationsschnittstellen, Mikrocontroller, Rechen- oder Steuerplatinen sowie andere Funktionsbauteile können Komponenten eines Systems sein oder ein System bereitstellen. Auf einem System bzw. einer Systemkomponente können Programme, Applikationen, Applikationssoftware, Software, Routinen, Algorithmen etc. ausgeführt werden. Die dem erfindungsgemäßen System zugehörige Messanordnung sowie das Prüfmittel sind als Komponenten des Systems anzusehen. Prüfmittel und Messanordnung können baulich zusammengefasst sein, jedoch auch separat (in diesem Fall jedoch vorzugsweise datenkommunikationstechnisch miteinander verbunden) angeordnet sein.

Ferner umfasst das erfindungsgemäße System eine Messanordnung, welche dazu ausgebildet und derart angeordnet ist, zumindest einen ersten Absorptionswert betreffend die im Observationsraum durch das Absorptionsmedium absorbierte elektromagnetische Strahlung in einem ersten charakteristischen Wellenlängenbereich zu erfassen, und zumindest einen zweiten Absorptionswert betreffend die im Observationsraum durch das Absorptionsmedium absorbierte elektromagnetische Strahlung in einem zweiten charakteristischen Wellenlängenbereich zu erfassen. Dabei liegt der Absorption in dem ersten charakteristischen Wellenlängenbereich ein erstes Absorptions-Charakteristikum zugrunde, während der Absorption in dem zweiten charakteristischen Wellenlängenbereich ein zweites Absorptions-Charakteristikum zugrunde liegt.

Der Terminus "Messanordnung" kann dahingehend zu verstehen sein, dass es sich um eine Anordnung mehrerer zur Erfassung von Messdaten ausgebildeten Einheiten handeln kann (Erfassungsmittel). Eine Messanordnung kann jedoch auch ausschließlich eine Messeinheit umfassen. Die Messeinheit(en) können für sich genommen jeweils eines oder mehrere Mess- bzw. Sensorelemente aufweisen und jeweils ein "Erfassungsmittel" bereitstellen. Die Messeinheit(en) weist/weisen vorzugsweise jeweils zumindest ein strahlungsempfindliches elektrisches Bauelement zur Detektion von seitens der zündwirksamen Erscheinungen emittierter elektromagnetischer Strahlung auf. Beispielsweise kann es sich dabei um eine Fotodiode oder einen Fotowiderstand handeln.

Unter einer "Erfassung eines Absorptionswerts" (damit ist der zumindest eine erste Absorptionswert und der zumindest eine zweite Absorptionswert gemeint) kann eine unmittelbare Messung einer Strahlungsabsorption, jedoch auch eine mittelbare Messung der Strahlungsabsorption verstanden werden (beides unter Einsatz eines geeigneten Erfassungsmittels). Insbesondere kann unter einer "mittelbaren Messung" der Absorption die Messung einer Strahlungsintensität (der von einer zündwirksamen Erscheinung emittierten Strahlung) oder eines anderen die emittierte Strahlung repräsentierenden Messwerts (durch die Messanordnung, also Erfassungsmittel) samt anschließender Ermittlung eines zugehörigen Absorptionswerts auf Basis der gemessenen Strahlungsintensität oder des anderen die emittierte Strahlung repräsentierenden zu verstehen sein. Der Absorptionswert kann sodann beispielsweise durch Abgleichen oder Normieren der gemessenen Strahlungsintensität oder des anderen die emittierte Strahlung repräsentierenden Werts auf eine Kalibriermessung (ohne Absorption) oder vorgegebenen Vergleichsdaten (Vergleichskurven, Vergleichswerten) ermittelt werden. Auch eine anderweitige rechnerische Ermittlung ist denkbar. Eine Bestimmung von Absorptionswerten ist durch den Zusammenhang *Transmission = 1 - Absorption* und somit *Absorption = 1 - Transmission* ermöglicht. Die Absorption kann vorliegend nicht nur die reine Strahlungsabsorption durch Partikel umfassen, sondern auch Streuprozesse von auf die Partikel auftreffender Strahlung. Sodann kann anstelle der erwähnten Absorption besser auf den Terminus der Extinktion zurückgegriffen werden. Die Extinktion setzt sich zusammen aus: *Extinktion = Absorption + Streuung.* Entsprechend sei betont, dass an jeder Stelle dieser Beschreibung unter einer "Absorption" auch eine "Extinktion" zu verstehen sein kann. Folglich können "Absorptionswerte" auch "Extinktionswerte" sein, ebenso kann ein "Absorptionsmaß" ein "Extinktionsmaß" sein. Unter Berücksichtigung dieses Zusammenhangs lässt sich aus jener nach Hindurchtreten (transmittieren) der von einer zündwirksamen Erscheinung emittierten Strahlung durch das Absorptionsmedium (welches vom Medium gebildet sein kann) in der Messanordnung ankommenden (und detektierbaren) Strahlungsintensität oder des anderen die emittierte Strahlung repräsentierenden Werts die Absorption (bzw. Extinktion) berechnen. Unter einer Strahlungsintensität kann das innerhalb eines bestimmten Wellenlängenbereichs detektierte Maximum der Strahlung zu verstehen sein, gleichsam auch ein Mittelwert von mehreren gemessenen Strahlungsintensitäten innerhalb des jeweiligen Wellenlängenbereichs sowie ein Integral einer Kurve von Strahlungsintensitäten über einen bestimmten Wellenlängenbereich. Messtechnisch kann die erfasste Strahlungsintensität oder der andere die emittierte Strahlung repräsentierende Wert einheitenlos sein, gleichsam aber auch durch einen Proportionalwert wiedergegeben werden, beispielsweise durch in der Messanordnung erfasste elektrische Spannungen. Die "Erfassung eines Absorptionswerts" mit einem "Erfassungsmittel" ist nicht zwingend als reiner Messvorgang zu verstehen, sondern kann bereits Schritte einer Datenprozessierung und/oder Datenauswertung beinhalten. Nebst der Strahlungsintensität können zur Erfassung der Absorptionswerte auch anderweitige geeignete Messgrößen zugrunde gelegt werden. Dies kann bereits in der Messanordnung bzw. jenen der Messanordnung zugehörigen Erfassungsmitteln erfolgen, z. B. kann die Messanordnung nebst einer Sensorik (zur messtechnischen Erfassung) Datenverarbeitungsmittel wie eine Datenverarbeitungseinheit aufweisen. Zur Ermittlung des Absorptionsmaßes ist eine Ermittlung von zwei oder mehr zweiten Absorptionswerten vorteilhaft. Auch die Ermittlung von > 1 ersten Absorptionswerten kann vorteilhaft sein.

Bei der "Erfassung eines Absorptionswerts" (bzw. des zumindest einen ersten und des zumindest einen zweiten Absorptionswerts) spielt die messtechnische "Erfassung" (Detektion) von seitens der zündwirksamen Erscheinungen abgegebenen (emittierten) elektromagnetischen Strahlung unter Einsatz eines oder mehrerer Erfassungsmittel eine wesentliche Rolle. Die Strahlung kann dabei wellenlängenselektiv oder in vorgegebenen Spektralbereichen, d.h. Wellenlängenbereichen, erfasst werden (erster charakteristischer Wellenlängenbereich, zweiter charakteristischer Wellenlängenbereich). Dabei können beispielsweise wellenlängenabhängige Strahlungsintensitäten (z. B. in Form spektraler Peaks) erfasst werden. Unter einer "Erfassung" kann - wie erwähnt - nicht nur die Detektion als solches verstanden werden, sondern auch eine (zumindest temporäre) Aufnahme, d. h. Aufzeichnung oder Abspeicherung, der Daten. Auch dies kann bereits in den genannten Erfassungsmitteln (z. B. einem ersten und zweiten Erfassungsmittel, die in unterschiedlichen Wellenlängenbereichen Strahlung detektieren) erfolgen. Zur Erfassung der von den zündwirksamen Erscheinungen abgegebenen Strahlung werden vornehmlich Messeinheiten (diese können die Erfassungsmittel bereitstellen oder Teil dieser sein) mit fotosensitiven Elementen eingesetzt, z.B. Fotodioden. Die dort empfangene Strahlung kann in Form von erzeugten Spannungen aufgenommen werden. Der Intensitätswert der Spannungen kann dabei proportional zur Intensität der bei einer bestimmten Wellenlänge oder in einem Wellenlängenbereich vorliegenden Strahlungsintensität sein. Derart aufgenommene Messdaten können vorangehend zu einer qualitativen bzw. quantitativen Auswertung in Bezug auf die Bestimmung von Absorptionswerten einer zeitlich vorgelagerten Vorprozessierung unterzogen werden. Dabei können die erfassten Daten (z.B. Rohdaten) in ein gewünschtes Datenformat oder eine Datendarstellung überführt werden.

Erfindungsgemäß umfasst das System ein Prüfmittel, welches dazu eingerichtet ist, aus dem zumindest einen ersten Absorptionswert und dem zumindest einen zweiten Absorptionswert ein Absorptionsmaß zu ermitteln. Bei dem ermittelten "Absorptionsmaß" handelt es sich vorzugsweise um ein materialabhängiges Maß. Ein "Absorptionswert" kann ein die gemessene oder ermittelte Strahlungsabsorption (durch das Absorptionsmedium) wiederspiegelnder physikalischer Parameter sein. Der Absorptionswert kann einheitenlos sein oder kann eine physikalische Einheit aufweisen. Der Absorptionswert kann gleichsam ein Proportionalparameter zur gemessenen oder ermittelten Strahlungsabsorption (durch das Absorptionsmedium) sein. Ein "Absorptionsmaß" kann ebenfalls ein physikalischer Parameter sein, insbesondere jedoch ein Wert, der Absorptionscharakteristika eines Materials wiedergibt (z. B. einen Absorptionskoeffizienten). Ein Absorptionsmaß kann gegebenenfalls aus einem Absorptionswert berechnet werden.

Stellt beispielsweise jenes in dem Reservoir enthaltene Medium unmittelbar das Absorptionsmedium bereit, so mag das Absorptionsmaß vom Material des Mediums bzw. seiner stofflichen Zusammensetzung (also seinen Bestandteilen) abhängen, gleichwohl mag das Absorptionsmaß zusätzlich von Umgebungsbedingungen (z. B. Temperatur, Druck etc.) abhängen. Entsprechend ist eine in-situ Ermittlung des Absorptionsmaßes unter den an Ort und Stelle im Reservoir tatsächlich vorliegenden Bedingungen von besonderem Interesse. Bei Kenntnis des Absorptionsmaßes kann dies bei der Einstellung von Messempfindlichkeiten eines Funkenmelders oder bei der Gefahrenbeurteilung der vom Funkenmelder gemessenen Signale berücksichtigt werden. Auch eine präzise Vorhersage des Absorptionsmaßes vorausgehend zu einer Verwendung/Inbetriebnahme eines Reservoirs mit einem bestimmten Medium kann für einen zuverlässigen und situationsadäquaten Brand- und Explosionsschutz von eminenter Bedeutung sein. Entsprechend kann eine experimentelle Simulation der in einem Reservoir vorliegenden Absorptionsbedingungen in kleinerem Maßstab (z. B. in vitro im Labor), in einem extern zum Reservoir vorliegenden Observationsraum, sinnvoll sein. Daraus lassen sich sodann Parameter ableiten, die bei einer tatsächlichen Überwachung in-situ berücksichtigt werden sollten (z. B. in Bezug auf die Messempfindlichkeit eines das Reservoir überwachenden Funkenmelders oder Betriebsparameter einer Anlage).

Das Prüfmittel kann eine Recheneinheit und/oder eine auf einer Recheneinheit abgelegte Routine, Software oder ein Algorithmus sein. Unter einem "Prüfmittel" kann auch eine Recheneinheit in Kombination mit einer Routine, einer Software oder einem Algorithmus verstanden werden. Ein Prüfmittel kann eine oder mehrere Recheneinheiten und/oder eine oder mehrere Routinen, Softwareprogramme, oder Algorithmen umfassen. Ferner kann das Prüfmittel in Form eines Mikrocontrollers ausgebildet sein, gleichsam ein logischer Schaltkreis, z.B. ein FPGA oder ein ASIC sein. Das Prüfmittel kann mit der Messanordnung zu einer baulichen Einheit verbunden sein, z. B. in einem gemeinsamen Gehäuse angeordnet sein. Gleichsam kann das Prüfmittel extern zur Messanordnung angeordnet sein. In diesem Falle verfügen Messanordnung und Prüfmittel über eine datenkommunikationstechnische Verbindung, sodass ein Datenaustausch, Signalaustausch und/oder Befehlsaustausch zwischen Messanordnung und Prüfmittel ermöglicht ist. Dazu können Messanordnung und Prüfmittel geeignete Kommunikationsschnittstellen aufweisen.

Wesentlich für die vorliegende Erfindung ist, dass durch die erfindungsgemäß ermöglichte Erfassung der in einem Reservoir zu einem bestimmten Zeitpunkt tatsächlich vorliegenden Absorptionssituation betreffend seitens eines Absorptionsmediums absorbierter Strahlung (die von zündwirksamen Erscheinungen emittiert wird) situationsadäquat Messempfindlichkeitsanpassungen (z. B. von Funkenmeldern) oder Betriebsparameteranpassungen einer übergeordneten Anlage oder Maschine, die das Reservoir umfasst, vorgenommen werden können.

Ferner kann das erfindungsgemäße System wie auch das Verfahren zur präventiven Untersuchung von möglicherweise in einem medienbeladenen oder mediendurchströmten Reservoir entstehenden zündwirksamen Erscheinungen in Bezug auf mögliche in dem Reservoir auftretende Absorptionsphänomene der seitens der zündwirksamen Erscheinungen emittierten elektromagnetischen Strahlung durch Absorptionsmedien eingesetzt werden. In diesem Fall kann eine Probe des zu verwendenden Mediums in einem extern zum Reservoir angeordneten Observationsraum (z. B. in einem Prüflabor) einer entsprechenden Untersuchung unterzogen werden. Im (externen) Observationsraum können sodann die Bedingungen des Mediums (Absorptionsmediums) im Reservoir experimentell nachgestellt und Absorptionsphänomene untersucht werden. Damit können schon vor Beladen oder Durchströmen eines Reservoirs mit einem Medium (z. B. vor Inbetriebnahme einer Anlage, vor einer Neubeladung eines Reservoirs etc.) Maßnahmen getroffen werden, die eine die potenziellen Absorptionsphänomene berücksichtigende und zuverlässige Erkennung von zündwirksamen Erscheinungen samt zugehöriger Gefahreneinschätzung erlauben. Dies kann sich beispielsweise in einer entsprechenden Kalibrierung oder Einstellung (z. B. Messempfindlichkeitsanpassung und/oder Schwellwertanpassung) von zur Beobachtung des Reservoirs eingesetzten Funkenmeldern/Brandmeldern oder in einer entsprechenden Anpassung bestimmter Betriebsparameter (z. B. Menge, Konzentration, Durchflussmenge, Flussrate, Druck, Temperatur und Art des Mediums in dem Reservoir) niederschlagen.

Durch eine derartige intelligente Einschätzung bzw. experimentelle Untersuchung von in einem medienbeladenen oder mediendurchströmten Reservoir tatsächlich oder potentiell auftretenden Absorptionsphänomenen werden nicht nur aus einer falschen Einstellung von Funken- oder Brandmeldern (bei potentiell vorliegenden Absorptionsphänomenen) hervorgehende Fehleinschätzungen/Fehlalarme vermieden, sondern es können schon vor Beladung/Durchströmung eines Reservoirs mit einem Medium entsprechende Schutzmaßnahmen vorgenommen werden, mit denen die Brand- oder Explosionsgefahr durch zündwirksame Erscheinungen reduziert oder deren Erkennung verbessert werden kann. So können beispielsweise Messempfindlichkeiten (von Funken- oder Brandmeldern) oder Betriebsparameter präventiv auf einen individuellen Anwendungsfall und den damit einhergehenden Medien- oder Umgebungs-spezifischen Voraussetzungen angepasst werden.

Zündwirksame Erscheinungen können - wie eingangs erwähnt - heiße Oberflächen, Flammen und heiße Gase, mechanisch erzeugte Funken, elektrostatische Entladungen oder Glimmnester sein. Auch könne "zündwirksame Erscheinungen" aus elektrischen Anlagen oder brennenden Metallpartikeln resultieren. Unter einer "zündwirksamen Erscheinung" kann im vorliegenden Kontext somit eine (z. B. mit der Messanordnung) optisch wahrnehmbare Quelle, d. h. eine Quelle einer Strahlungsemission verstanden werden. Funken-, Flammen- oder Gluterscheinungen können unter zündwirksamen Erscheinungen subsumiert werden, gleichsam ein Partikel von hoher Temperatur, also ein heißer Partikel (sog. Heißpartikel).

Wie erwähnt, bezieht sich die Erfindung auf die Analyse des Absorptionsverhaltens von seitens zündwirksamer Erscheinungen emittierter elektromagnetischer Strahlung durch Absorptionsmedien in einem "mediendurchströmten oder medienbeladenen Reservoir". Nebst der eingangs genannten Definitionen und Erläuterungen zu den Termini "Medium", "medienbeladenes" und "mediendurchströmtes" Reservoir sei auf die nachfolgenden Erläuterungen hingewiesen. Demnach können unter einem "Medium" (dieses kann zugleich auch das Absorptionsmedium bilden) Feststoffe, Feststoffpartikel, Gemische verschiedener Feststoffe oder Feststoffpartikel-Gemische, Staubpartikel etc. verstanden werden. Das Medium kann Feststoffpartikel von unterschiedlicher Partikelgröße aufweisen. Auch kann das Medium flüssige oder gasförmige Komponenten enthalten. Unter einem Medium können auch Feststoffe verstanden werden, die während des Transports ihren Aggregatszustand zumindest teilweise ändern, oder in Bezug auf Ihre Form und/oder Konsistenz Änderungen erfahren. Auch kann es sich um ein pastöses, gelartiges, zähflüssiges Medium handeln. Grundsätzlich vorstellbar ist es auch, die vorliegende Erfindung bei Medien einzusetzen, die in flüssigem oder gasförmigem Zustand in dem Reservoir vorliegen oder durch dieses transportiert werden, solange dabei zündwirksame Erscheinungen auftreten und diese messtechnisch (optisch) erfassbar sind. Werden derartige Stoffe bzw. Partikel bewegt, insbesondere bei im Vergleich zum Normaldruck erhöhten oder verringerten Druckwerten, steigt das Risiko für das Auftreten zündwirksamer Erscheinungen und damit auch die Gefahr einer Flammenbildung, eines Feuers oder einer Explosion (z.B. einer Staubexplosion). Dies kann verstärkt werden durch von Maschinen- oder Anlagenkomponenten eingetragenen Schmutz, Staub, Fremdpartikel, Metallpartikel oder gar einen unmittelbaren Funkeneintrag, der sich in dem Reservoir ausbreiten kann.

Unter einem mit einem Medium "beladenen" Reservoir kann - wie schon einleitend erwähnt - beispielsweise ein mit einer Feststoffschüttung, einer Partikelschüttung oder einer Granulat-Schüttung beaufschlagtes Behältnis (z.B. ein Silo oder eine Lagerkammer) verstanden werden, in welchem das Medium ohne aktiven Transport (d.h. ohne aktive Bewegungsinduktion) vorgehalten ist. Gleiches kann für die vorangehend beschriebenen weiteren Medienformen gelten, die eine von einem Festzustand abweichenden Aggregatszustand aufweisen.

Unter einem "mediendurchströmten" Reservoir kann ein (zumindest teilweise) nach außen geschlossener Förderweg, eine Förderleitung oder ein Förderkanal verstanden werden, in welchem/welcher eine Medienströmung eines Mediums (z.B. mechanisch oder pneumatisch) transportiert wird. Auch ein mit einer Förderschnecke versehener Förderkanal kann als ein mediendurchströmtes Reservoir angesehen werden. Ebenso kann ein Fallschacht, ein Filter, ein Filtersystem oder ein Förderband ein mediendurchströmtes Reservoir bereitstellen. In einem mediendurchströmten Reservoir liegt das Medium also vornehmlich in einem bewegten Zustand vor. In Abhängigkeit der Art und Natur des Mediums, der Strömungsgeschwindigkeit des Mediums, sowie der Form und Größe des Reservoirs, können aufgrund von Medienbewegungen beispielsweise Verwirbelungen (insbesondere bei turbulenter Strömung), lokale Partikelakkumulationen, Verpuffungen etc. einhergehen, was insgesamt zu einer erhöhten Reibung zwischen dem Medium zugehörigen Partikeln untereinander sowie zwischen den Partikeln und Wandungen des Reservoirs führen kann. Damit assoziiert sein kann eine erhöhte Entwicklung von Reibungswärme. Verstärkt werden kann dies von durch Maschinen- oder Anlagenkomponenten eingetragenen Schmutz, Staub, Fremdpartikel, Metallpartikel oder gar einen unmittelbaren Funkeneintrag, der sich in dem Reservoir ausbreiten kann.

Insgesamt ermöglicht die vorliegende Erfindung die Erfassung und Analyse von Absorptionsphänomenen, bei denen elektromagnetische Strahlung einer zündwirksamen Erscheinung bei einer bestimmten Wellenlänge oder in einem bestimmten Wellenlängenbereich von einem Absorptionsmedium (welches das Medium sein kann) absorbiert wird. Mit der vorliegenden Erfindung (System und Verfahren) kann die Erkennung von gefährlichen Zündinitialen (trotz Strahlungsabsorption) verbessert werden, bzw. es kann durch eine Vorhersage von Strahlungsabsorptionsphänomenen und einer mit dem Auftreten derartiger Absorptionsphänomene möglicherweise beeinträchtigten Erkennung von Zündinitialen vorgebeugt werden. Auf Basis der Kenntnis einer Strahlungsabsorption können Messempfindlichkeitsanpassungen oder Schwellwertanpassungen in Funkenmeldern vorgenommen werden, so dass die zuverlässige Erkennung von Zündinitialen trotz Strahlungsabsorptionsphänomenen sichergestellt wird. Auch können Strahlungsabsorptionsphänomene mittels der vorliegenden Erfindung schon vor der Beaufschlagung eines Reservoirs mit einem Medium (also z. B. vor Inbetriebnahme einer Anlagemit einem solchen Reservoir) experimentell vorhergesagt werden, sodass schon vor Beaufschlagung des Reservoirs mit dem Medium Anpassungen von zur Überwachung des Reservoirs vorgesehenen Funken- oder Brandmeldern vorgenommen werden können. Gleiches gilt für Anpassungen von Betriebsparametern des Reservoirs (oder einer das Reservoir aufweisenden Anlage bzw. Maschine). Eine solche Anpassung von Betriebsparametern kann in der Auswahl des Mediums, der Konzentration des Mediums, dem Füllgrad des Reservoirs, der Strömungsgeschwindigkeit des Mediums, der Temperatur, des Drucks etc. liegen.

Weitere vorteilhafte Ausgestaltungen eines erfindungsgemäßen Systems ergeben sich aus den in den Unteransprüchen angegebenen und den nachfolgend beschriebenen Merkmalen. Auch auf die in den Unteransprüchen aufgeführten Merkmale seien nachfolgend Bezug genommen. Die nachfolgend beschriebenen Merkmale können auch vorteilhafte Ausgestaltungen eines erfindungsgemäßen Verfahrens sein.

Nach einer ersten Ausgestaltung der Erfindung kann sowohl der erste charakteristische Wellenlängenbereich als auch der zweite charakteristische Wellenlängenbereich innerhalb eines Wellenlängenbereichs von 100 nm - 3500 nm liegen, wobei der erste charakteristische Wellenlängenbereich und der zweite charakteristische Wellenlängenbereich vorzugsweise nicht überlappen und vorzugsweise von einer Grenzwellenlänge oder einem Grenzwellenlängenbereich getrennt sind. Die Wellenlängenbereiche, in welchem von den zündwirksamen Erscheinungen abgegebene elektromagnetische Strahlung durch das Absorptionsmedium absorbiert wird bzw. unterschiedliche Absorptionscharakteristika vorliegen, sind materialabhängig. In dem ersten charakteristischen Wellenlängenbereich liegt ein anderes Absorptionscharakteristikum vor als im zweiten charakteristischen Wellenlängenbereich. Bei der Grenzwellenlänge bzw. im Grenzwellenlängenbereich geht ändert sich das Absorptionscharakteristikum. Zwar ist es auch möglich Absorptionscharakteristika bestimmter Medien im Wege einer Literaturrecherche zu aufzufinden (z. B. Absorptionskurven), für vielerlei Stoffe existieren jedoch keine bzw. nicht hinreichend aussagekräftige Daten. Insbesondere existieren solche Daten nicht für die im Bereich der Funkenmeldetechnik eingesetzten Sensoren. Ferner geben aus der Literatur bekannte Absorptionskurven nur unzureichend die tatsächlich in einem Reservoir vorliegenden Bedingungen wieder. Hier schafft die vorliegende Erfindung Abhilfe.

In Wellenlängenbereichen von 100 nm - 1500 nm können zündwirksame Erscheinungen (insbesondere Funken), die eine Temperatur von > 1000 °C mit herkömmlichen Funkenmeldern in der Regel mit hoher Signalintensität detektiert werden. In langwelligeren Wellenlängenbereichen, also z. B. > 1500 nm, können zündwirksame Erscheinungen in einem Temperaturbereich von 300 °C - 500 °C mit höherer Signalintensität detektiert werden. Selbstverständlich hängt dies von der Art der in den Funkenmeldern verwendeten Sensoren ab.

Nach einer weiteren Ausgestaltung der Erfindung kann die Messanordnung ein erstes Erfassungsmittel aufweisen, welches dazu eingerichtet ist, den zumindest einen ersten Absorptionswert in dem ersten charakteristischen Wellenlängenbereich zu erfassen. Auch kann die Messanordnung ein zweites Erfassungsmittel aufweisen, welches dazu eingerichtet ist, den zumindest einen zweiten Absorptionswert in dem zweiten charakteristischen Wellenlängenbereich zu erfassen. Vorteilhaft ist eine Erfassung von zwei oder mehr zweiten Absorptionswerten des zweiten charakteristischen Wellenlängenbereichs. Zur Bedeutung des Terminus "Erfassungsmittel" sei auf die vorangehende Beschreibung verwiesen. Das jeweilige erste respektive zweite Erfassungsmittel kann beispielsweise jeweils eine oder mehrere Messeinheit(en) umfassen, mit denen die seitens der zündwirksamen Erscheinungen abgegebene elektromagnetische Strahlung gemessen und der Absorptionswert daraus bestimmt werden kann. Vorstellbar ist auch, dass die Absorptionswerte unmittelbar von den Erfassungsmitteln zugehörigen Messeinheiten gemessen werden. Vorzugsweise ist das erste Erfassungsmittel (bzw. eine zugehörige Messeinheit) zur Erfassung elektromagnetischer Strahlung in einem Wellenlängenbereich optimiert, der mit dem ersten charakteristischen Wellenlängenbereich zusammenfällt, den ersten charakteristischen Wellenlängenbereich einschließt, oder innerhalb des ersten charakteristischen Wellenlängenbereichs liegt. Ebenfalls vorzugsweise ist das zweite Erfassungsmittel (bzw. eine zugehörige Messeinheit) zur Erfassung elektromagnetischer Strahlung in einem Wellenlängenbereich optimiert, der mit dem zweiten charakteristischen Wellenlängenbereich zusammenfällt, den zweiten charakteristischen Wellenlängenbereich einschließt, oder innerhalb des zweiten charakteristischen Wellenlängenbereichs liegt. Nach dieser Ausgestaltung umfasst die Messanordnung also zwei Erfassungsmittel, die in unterschiedlichen Wellenlängenbereichen elektromagnetische Strahlung erfassen können. Entsprechend können das erste und zweite Erfassungsmittel bei unterschiedlichen Wellenlängen ihre optimale Sensitivität aufweisen.

Nach einer weiteren Ausgestaltung der Erfindung kann die Messanordnung ein einziges Erfassungsmittel aufweisen, welches dazu eingerichtet ist, den zumindest einen ersten Absorptionswert in dem ersten charakteristischen Wellenlängenbereich zu erfassen und den zumindest einen zweiten Absorptionswert in dem zweiten charakteristischen Wellenlängenbereich zu erfassen. Beispielsweise kann das einzige Erfassungsmittel (z. B. eine einzige Messeinheit) über einen breiten Wellenlängenbereich elektromagnetische Strahlung oder Absorptionswerte detektieren oder ermitteln, sodass der erste und zweite charakteristische Wellenlängenbereich (jeweils zumindest teilweise) innerhalb eines erfassbaren Wellenlängenbereich liegt. Weiterhin kann das einzige Erfassungsmittel Mittel aufweisen, mit denen eine Erfassung der Absorptionswerte (unmittelbar oder durch Messung der seitens der zündwirksamen Erscheinungen emittierten Strahlung) in den jeweiligen charakteristischen Wellenlängenbereichen mit ausreichender Sensitivität ermöglicht wird.

Nach einer weiteren Ausgestaltung der Erfindung kann die Messanordnung eine Filtereinrichtung umfassen, die dazu eingerichtet ist, einen ersten spektralen Filterzustand und einen zweiten spektralen Filterzustand bereitzustellen, wobei in dem ersten spektralen Filterzustand eine Erfassung des zumindest einen ersten Absorptionswerts in dem ersten charakteristischen Wellenlängenbereich durch das Erfassungsmittel ermöglicht ist, und wobei in dem zweiten spektralen Filterzustand eine Erfassung des zumindest einen zweiten Absorptionswerts in dem zweiten charakteristischen Wellenlängenbereich durch das Erfassungsmittel ermöglicht ist. Diese Ausgestaltung ist insbesondere dann sinnhaft, wenn auf ein einziges Erfassungsmittel zurückgegriffen wird, welches sowohl im ersten als auch im zweiten charakteristischen Wellenlängenbereich ausreichend sensitiv ist. Bei der Filtereinrichtung handelt es sich um einen spektralen Filter, der z. B. in Form eines Wechselfilters oder eines Filterrads ausgebildet sein kann.

Nach einer weiteren Ausgestaltung der Erfindung kann die Messanordnung eine Filtereinrichtung, insbesondere einen Wechselfilter, umfassen, die dazu eingerichtet ist, eine Anzahl von > 2 (z. B. 3, 4, 5, 6, 7, 8, 9 oder 10) spektralen Filterzuständen bereitzustellen, wobei in einem jeweiligen spektralen Filterzustand eine Erfassung zumindest eines ersten Absorptionswerts respektive zumindest eines zweiten Absorptionswerts durch das Erfassungsmittel in Sub-Wellenlängenbereichen des ersten respektive zweiten charakteristischen Wellenlängenbereichs ermöglicht ist. Eine solche Ausgestaltung ermöglicht die Detektion einer Mehrzahl von Absorptionswerten in den jeweiligen charakteristischen Wellenlängenbereich, nämlich in diesbezüglichen Sub-Wellenlängenbereichen. Damit kann eine Verifizierung von in den jeweiligen charakteristischen Wellenlängenbereichen charakteristischem Absorptionsverhalten verifiziert werden. Auch bei diesem Ausführungsbeispiel kann es sich alternativ zum Wechselfilter um ein Filterrad handeln. Es ist möglich die Filtereinrichtung im Sinne eines Magazins mit einer Mehrzahl an Filtern auszubilden. Der Wechsel zwischen Filter unterschiedlicher spektraler Selektivität kann manuell oder automatisiert erfolgen.

Nach einer weiteren Ausgestaltung der Erfindung kann die Messanordnung Bestandteil eines Funkenmelders sein, wobei die Messanordnung ein in dem Funkenmelder integriertes Absorptionsspektrometer bereitstellen kann. Der Funkenmelder kann beispielsweise eine erste Messeinheit und eine zweite Messeinheit umfassen (ggf. noch weitere Messeinheiten). Die erste Messeinheit kann zur Erfassung von seitens der zündwirksamen Erscheinung abgegebener elektromagnetischer Strahlung in einem Wellenlängenbereich von 100 nm - 1500 nm, und bevorzugt von 750 nm - 1200 nm ausgebildet sein, wobei das Messempfindlichkeits-Optimum der ersten Messeinheit vorzugsweise in einem Wellenlängenbereich von ungefähr 950 nm, weiter vorzugsweise genau bei 950 nm liegt. Die erste Messeinheit kann vorzugsweise ein Si-basiertes Messelement umfassen, z.B. einen Si-basierten Halbleiter, der Teil einer Fotodiode sein kann. Vorgesehen sein kann zudem, dass die erste Messeinheit eine Mehrzahl von Si-basierten Messelementen umfasst. Die erste Messeinheit kann eine besonders ausgeprägte Empfindlichkeit (Sensitivität) für zündwirksame Erscheinungen (insbesondere Funken) mit einer Temperatur von > 1000 °C aufweisen. Es kann sich bei der ersten Messeinheit also um eine klassische Funkenmesseinheit handeln. In einem Wellenlängenbereich von > 1000 nm kann die erste Messeinheit eine geringere Messempfindlichkeit aufweisen. Vorteilhaft ist jedoch, dass sich die mit der ersten Messeinheit erfassten Messsignale relativ gut verstärken lassen. Die Verstärkung kann über eine klassische analoge oder digitale Signalverstärkung erfolgen (z.B. unter Einsatz eines Amplifikationsmoduls). Gleichsam kann aber auch eine für die erste Messeinheit hinterlegte Fehlerschwelle oder ein zur Auslösung eines Gefahrensignals hinterlegter Schwellwert angepasst werden. Zwar kann die erste Messeinheit für elektromagnetische Strahlung > 1000 nm nur schwach sensitiv sein, wird das Messsignal jedoch ausreichend verstärkt, so lassen sich jene in diesem Wellenlängenbereich mit der ersten Messeinheit in geringer Signalschwäche erfasste Signale dahingehend verstärken, dass den verstärkten Messdaten qualitative und/oder quantitative Informationen zu - in diesem Wellenlängenbereich elektromagnetische Strahlung abgebenden - zündwirksamen Erscheinungen entnommen werden können.

Die zweite Messeinheit kann zur Erfassung von seitens der zündwirksamen Erscheinung abgegebener elektromagnetischer Strahlung in einem Wellenlängenbereich von 1000 nm - 3500 nm ausgebildet sein, bevorzugt 1500 nm - 3000 nm, und besonders bevorzugt 2000 nm - 2800 nm. Damit liegt der mit der zweiten Messeinheit messtechnisch zugängliche Wellenlängenbereich in einem langwelligeren Spektralbereich als der Wellenlängenbereich der ersten Messeinheit. Die zweite Messeinheit umfasst vorzugsweise ein PbS-basiertes Messelement, z.B. einen PbS-basierten Halbleiter, der Teil einer Fotodiode sein kann. Vorgesehen sein kann zudem, dass die zweite Messeinheit eine Mehrzahl von PbS-basierten Messelementen umfasst. Auch GaAs kann als Sensormaterial zum Einsatz kommen. Die zweite Messeinheit kann sich besonders zur messtechnischen Erfassung von zündwirksamen Erscheinungen in einem Temperaturbereich von 300 °C - 500 °C eignen. In dem genannten Wellenlängenbereich kann die zweite Messeinheit eine hohe Empfindlichkeit aufweisen, jedoch können die erfassten Signale einen relativ hohen Rauschanteil umfassen. Die erhaltenen Signale lassen sich nur geringfügig verstärken. Die in dem genannten Wellenlängenbereich erzielbaren Signal-zu-Rausch-Verhältnisse sind also eher gering. Kommt es beispielsweise zu zündwirksamen Erscheinungen, die elektromagnetische Strahlung im zweiten Wellenlängenbereich abgeben, zu Strahlungsabsorptionsphänomenen, so kann die zweite Messeinheit - aufgrund der absorbierten Strahlung - in dem sensitiven Wellenlängenbereich in einem gewissen Maße "blind" werden, d.h. eine messtechnische Erfassung der zündwirksamen Erscheinung durch die zweite Messeinheit kann beeinträchtigt sein. In einem solchen Fall können derartige zündwirksame Erscheinungen - bei geeigneter Messempfindlichkeitsanpassung - aber von der ersten Messeinheit erfasst werden. Entsprechend ist die Kenntnis für das Auftreten solcher Absorptionsphänomene von besonderer Bedeutung für eine entsprechende Anpassung der Messempfindlichkeit.

Optional kann der Funkenmelder eine dritte Messeinheit umfassen, die zur Erfassung elektromagnetischer Strahlung von Umgebungslicht in einem Wellenlängenbereich von 100 nm - 500 nm eingerichtet sein kann. Insbesondere kann die dritte Messeinheit zur Erfassung von UV-Licht (UV-A, UV-B, UV-C) eingerichtet sein, also zur Erfassung von elektromagnetischer Strahlung in einem Wellenlängenbereich von 100 nm - 380 nm. Die dritte Messeinheit kann der ersten Messeinheit entsprechen, jedoch ohne einen den erfassbaren Wellenlängenbereich einschränkenden Filter. Entsprechend kann die erste Messeinheit einen Filter aufweisen. Auch auf der zweiten Messeinheit kann ein Filter angeordnet sein, welcher bei einer Wellenlänge von 1500 nm öffnet. Umgebungslicht kann in das Reservoir eintreten durch Öffnungen im Reservoir als solchem oder durch Öffnungen in einem zugehörigen Kanal- oder Leitungssystem. Auch von Maschinen- oder Anlagenkomponenten kann eine Lichterzeugung ausgehen. Umgebungslicht kann die zuverlässige Erfassung feuerartiger Erscheinungen mit der ersten und/oder zweiten Messeinheit stören, insbesondere jedoch die Erfassungs-Performance der ersten Messeinheit, da der Wellenlängenbereich des Umgebungslichts im Bereich des von der ersten Messeinheit erfassbaren Spektralbereich liegt. In Folge der Präsenz von Umgebungslicht kann eine Anpassung der Messempfindlichkeit der ersten und/oder zweiten Messeinheit durchgeführt werden, insbesondere der ersten Messeinheit des Melders. Gleichsam kann auch vorgesehen sein, die erste Messeinheit bei Vorliegen von Umgebungslicht abzuschalten, um eine diesbezügliche Messbeeinträchtigung zu vermeiden. Umgebungslicht kann jedoch auch auf Basis von mit der ersten und/oder zweiten Messeinheit erfassten Messdaten ermittelt werden, beispielsweise anhand des zeitlichen Signalverlaufs bzw. der Peakform. Denn während zündwirksame Erscheinungen (z.B. Funken) stets eine sich in der Zeitdomäne verändernde Peakform aufweisen, ist die Peakform von stationärem Umgebungslicht unveränderlich bzw. konstant. Entsprechend kann aus dem zeitlichen Signalverlauf der mit der ersten und/oder zweiten Messeinheit erfassten Messdaten auf das Vorliegen von Umgebungslicht geschlossen werden.

Nach einer weiteren Ausgestaltung der Erfindung kann der Observationsraum innerhalb des Reservoirs angeordnet sein und ein Volumenelement des Reservoirs bilden. Handelt es sich um eine Messanordnung, die ein räumlich beschränktes Messfeld bzw. Messvolumen (Field of View) zur Erfassung elektromagnetischer Strahlung aufweist, so ist die Messanordnung derart anzuordnen, dass das Messvolumen innerhalb des Reservoirs liegt (dort einen Observationsraum bildend). Der Observationsraum ist in diesem Falle kein abgeschlossener Raum, sondern Teil des Reservoirs. Die Messanordnung kann in eine Wandung des Reservoirs integriert sein, innerhalb des Reservoirs positioniert sein oder außerhalb des Reservoirs (z. B. in Nähe zu einem Fenster des Reservoirs) angeordnet sein. Das Fenster ist vorzugsweise durchlässig für elektromagnetische Strahlung. Bei jener Ausbildung der Messanordnung, bei welcher diese kein vorgegebenes Messvolumen aufweist, und sämtliche der auf die Messanordnung auftreffende elektromagnetische Strahlung im zugänglichen Wellenlängenbereich der Messanordnung erfasst wird, so stellt das Reservoir in jenem Bereich des Reservoirs den Observationsraum bereit, aus welchem die von den zündwirksamen Erscheinungen emittierte Strahlung sich in Richtung der Messanordnung ausbreiten und von dieser erfasst werden kann.

Nach einer weiteren Ausgestaltung der Erfindung kann der Observationsraum extern zum Reservoir angeordnet sein und eine Observationsbox bilden. In diesem Fall ist der Observationsraum nicht Teil des Reservoirs, vielmehr kann ein zur Beladung/Durchströmung eines Reservoirs vorgesehenes Medium extern in Bezug auf Absorptionsphänomene untersucht werden. Dazu kann das Medium z. B. an eine Prüfstelle (z. B. ein Labor) übersendet/übergeben werden. Dort kann eine Probe des Mediums in eine Observationsbox gefüllt werden. Die Beladung kann mit Blick auf bestimmte Randbedingungen an die tatsächlich in dem Reservoir vorliegende oder zu erwartende Beladungs- oder Durchströmungssituation angepasst werden. Die Observationsbox ist in diesem Fall ein geschlossener Raum im Sinne einer Testkammer. Unter "geschlossen" ist aber nicht zwingend ein hermetisch versiegelter Raum zu verstehen sein, vielmehr kann die Observationsbox eine Einfüllöffnung für das zu testende Medium aufweisen. Auch kann die Observationsbox ein strahlungsdurchlässiges Beobachtungsfenster aufweisen, sodass mittels einer außerhalb der Observationsbox angeordneten Messanordnung elektromagnetische Strahlung erfasst werden kann, die durch zündwirksame Erscheinungen innerhalb der mit Medium gefüllten Observationsbox erzeugt und emittiert wird. Auch kann die Observationsbox eine oder mehrere in Bezug auf die genannte elektromagnetische Strahlung transparente Wände aufweisen. Die Observationsbox kann auch vollständig transparent sein, d. h. alle Wände sind transparent ausgebildet. Die Observationsbox kann eine Küvette sein. Die Messanordnung kann in eine Wandung der Observationsbox integriert sein, innerhalb der Observationsbox positioniert sein oder außerhalb der Observationsbox (z. B. in Nähe zu einem Fenster der Observationsbox) angeordnet sein. Das Fenster ist vorzugsweise durchlässig für elektromagnetische Strahlung. Im Falle, dass die Messanordnung kein vorgegebenes Messfeld aufweist, und auf die Messanordnung auftreffende elektromagnetische Strahlung erfasst wird, so stellt die Observationsbox in jenem Abschnitt den Observationsraum bereit, aus welchem zündwirksame Erscheinungen mittels der Messanordnung erfasst werden können.

Nach einer weiteren Ausgestaltung der Erfindung kann die Observationsbox in Verbindung mit der Messanordnung eine Analysebox bilden. Die Analysebox kann portabel sein, sodass entsprechende Untersuchungen von Absorptionsphänomenen beispielsweise vor Ort bei einem Kunden oder in einem Labor durchgeführt werden können. Die Messanordnung kann dabei mit der Observationsbox eine gemeinsame Bauteilanordnung ausbilden, z. B. kann die Messanordnung (ggf. die zugehörige erste und zweite Erfassungseinheit) in eine Wandung der Observationsbox integriert oder daran befestigt sein.

Es kann ferner vorgesehen sein, eine bereits an einem medienbeladenen oder mediendurchströmten Reservoir angeordnete Halterung eines Funkenmelders zu nutzen, um eine Observationsbox sowie Analysebox daran anzuordnen. Der Funkenmelder kann dabei einen Teil der Analysebox bereitstellen oder diese ausbilden. Der Funkenmelder kann also einen Teil der Messanordnung bereitstellen.

Nach einer weiteren Ausgestaltung der Erfindung kann das Prüfmittel eine Datenverarbeitungseinheit umfassen. Ferner kann das Prüfmittel datenkommunikationstechnisch mit der Messanordnung verbunden sein. Bei der Datenverarbeitungseinheit kann es sich um die eingangs erwähnte Recheneinheit handeln. Alternativ oder zusätzlich kann eine auf der Recheneinheit abgelegte Routine, Software oder ein Algorithmus Teil des Prüfmittels sein. Entsprechend kann unter dem "Prüfmittel" auch eine Datenverarbeitungseinheit (Recheneinheit) in Kombination mit einer Routine, einer Software oder einem Algorithmus verstanden werden. Das Prüfmittel kann eine oder mehrere Datenverarbeitungseinheiten (Recheneinheiten) und/oder eine oder mehrere Routinen, Softwareprogramme, oder Algorithmen umfassen. Ferner kann das Prüfmittel in Form eines Mikrocontrollers ausgebildet sein, gleichsam ein logischer Schaltkreis, z. B. ein FPGA oder ein ASIC sein. Losgelöst davon, ob das Prüfmittel mit der Messanordnung zu einer baulichen Einheit verbunden ist, z. B. in einem gemeinsamen Gehäuse oder auf einer gemeinsamen Platine angeordnet ist, oder ob das Prüfmittel extern zur Messanordnung angeordnet ist, ist das Prüfmittel datenkommunikationstechnisch mit der Messanordnung verbunden. Dazu kann die Messanordnung und das Prüfmittel über geeignete Schnittstellen verfügen. Die Datenkommunikationstechnische Verbindung kann kabellos oder kabelgebunden ausgeführt sein. In jedem Falle verfügen Messanordnung und Prüfmittel über eine datenkommunikationstechnische Verbindung, sodass ein Datenaustausch, Signalaustausch und/oder Befehlsaustausch zwischen Messanordnung und Prüfmittel ermöglicht ist.

Nach einer weiteren Ausgestaltung der Erfindung kann das Prüfmittel dazu eingerichtet sein, auf Basis des zumindest einen ersten Absorptionswerts und des zumindest einen zweiten Absorptionswerts eine Absorptionskurve zu ermitteln. Nach einer weiteren Ausgestaltung der Erfindung kann das erste Absorptions- Charakteristikum ein Charakteristikum in Bezug auf eine wellenlängenabhängige Absorptionskurve in dem ersten charakteristischen Wellenlängenbereich sein. Das auf die Absorptionskurve bezogene Charakteristikum kann beispielsweise eine Kurvencharakteristik wie eine Kurvenform, eine Steigung, einen Ordinatenwert etc. betreffen. Nach einer weiteren Ausgestaltung der Erfindung kann das zweite Absorptions-Charakteristikum ein Charakteristikum in Bezug auf eine wellenlängenabhängige Absorptionskurve in dem zweiten charakteristischen Wellenlängenbereich sein. Das auf die Absorptionskurve bezogene Charakteristikum kann beispielsweise eine Kurvencharakteristik wie eine Kurvenform, eine Steigung, einen Ordinatenwert etc. betreffen. Nach einer weiteren Ausgestaltung der Erfindung kann das erste Absorptions- Charakteristikum eine im Wesentlichen als Plateau ausgebildete wellenlängenabhängige Absorptionskurve in dem ersten charakteristischen Wellenlängenbereich sein. Unter einem Plateau kann insbesondere ein Bereich mit einer Steigung von Null verstanden werden, d. h. ein Ordinatenwert der Absorptionskurve ist in dem ersten charakteristischen Wellenlängenbereich konstant. Nach einer weiteren Ausgestaltung der Erfindung kann das zweite Absorptions-Charakteristikum im Wesentlichen ein Linearanstieg der wellenlängenabhängigen Absorptionskurve in dem zweiten charakteristischen Wellenlängenbereich sein. In diesem Bereich weist die Absorptionskurve somit eine Steigung auf. Die Steigung kann - muss aber nicht - konstant sein. Dieser Zusammenhang macht sich das Phänomen zu eigen, dass das Absorptionsverhalten von Absorptionsmedien wellenlängenabhängig ist.

Der Ermittlung einer Absorptionskurve kann eine Näherungsannahme zugrunde gelegt werden, wonach die ersten Absorptionswerte in dem ersten charakteristischen Wellenlängenbereich konstant sind, d.h. bei verschiedenen Wellenlängen (innerhalb des ersten charakteristischen Wellenlängenbereichs) konstante Werte annehmen. In dem zweiten charakteristischen Wellenlängenbereich hingegen kann angenommen werden, dass der Absorptionskurve (also den zweiten Absorptionswerten) eine konstante (wellenlängenbezogene) Steigung unterliegt. Schon bei Kenntnis eines einzigen ersten Absorptionswerts und zweier zweiter Absorptionswerte lässt sich durch entsprechende Extrapolation eine Näherungs-Absorptionskurve ermitteln. Auch die Kenntnis eines ersten Absorptionswerts, eines zweiten Absorptionswerts sowie der Grenzwellenlänge lässt sich die Absorptionskurve ermitteln.

Nach einer weiteren Ausgestaltung der Erfindung kann das Prüfmittel dazu eingerichtet sein, auf Basis des Linearanstiegs einen Absorptionskoeffizienten als Absorptionsmaß zu ermitteln. Insbesondere lässt sich aus der Steigung der Absorptionskurve im zweiten charakteristischen Wellenlängenbereich ein Absorptionskoeffizient berechnen. Auch lässt sich anhand der Steigung ein wellenlängenabhängiges Veränderungsmaß der Absorption ermitteln. Zur Bestimmung des Absorptionskoeffizienten kann die Absorptionskurve nicht logarithmisch oder logarithmisch dargestellt werden. In dem ersten charakteristischen Wellenlängenbereich ist der Absorptionskoeffizient wellenlängenunabhängig und nimmt einen konstanten Wert an. Die Kenntnis des wellenlängenabhängigen Absorptionsverhaltens (Absorptionskoeffizient oder Veränderungsmaß der Absorption) ist von besonderem Interesse, da in diesem (zweiten charakteristischen) Wellenlängenbereich die von "heißen" Partikeln abgegebene elektromagnetische Strahlung in einem nicht zu vernachlässigenden Maße absorbiert wird und daher mittels eines Funkenmelders nur unzureichend erkannt werden kann. Daher ist die Kenntnis oder Vorhersage des Absorptionsverhaltens bestimmter Stoffe in Bezug auf die überwachten Wellenlängenbereiche von besonderem Interesse um Fehlinterpretationen von Funkenmeldern zu vermeiden.

Nach einer weiteren Ausgestaltung der Erfindung kann das Prüfmittel dazu eingerichtet sein, das ermittelte Absorptionsmaß mit einem vorgegebenen Absorptionsmaß zu vergleichen und im Falle eines über in Bezug zum vorgegebenen Absorptionsmaß über ein vorbestimmtes Maß hinausgehendes ermitteltes Absorptionsmaß eine Information betreffend ein kritisches Absorptionsereignis, insbesondere an eine Warneinheit, den Funkenmelder oder ein Löschsystem, auszugeben. Im Falle, dass die Absorption derart hoch ist, dass eine zuverlässige Erfassung von zündwirksamen Erscheinungen bzw. eine zuverlässige Gefahreneinschätzung nicht mehr gewährleistet ist, kann eine entsprechende Information betreffend ein solches kritisches Absorptionsereignis an eine Warneinheit, den Funkenmelder oder das Löschsystem weitergegeben werden. Bei einer Weitergabe dieser Information an den Funkenmelder kann in Folge der Weitergabe eine Empfindlichkeitsanpassung jener der im Funkenmelder vorgesehenen Messeinheiten vorgenommen werden, alternativ oder zusätzlich eine Schwellwertanpassung. Auch kann eine Empfehlung an einen Betreiber einer zu überwachenden Anlage oder des Funkenmelders weitergegeben werden eine entsprechende Anpassung des Funkenmelders vorzunehmen. Der Funkenmelder kann somit dazu eingerichtet sein, in Folge eines Erhalts der Information betreffend das kritische Absorptionsereignis eine Empfindlichkeitsanpassung der Messanordnung (sofern die Messanordnung Teil eines Funkenmelders ist) und/oder einer oder mehrerer weiterer Messeinheiten vorzunehmen. Bei Informationsweitergabe an eine Warneinheit kann eine optische oder akustische Warnung ausgelöst werden (siehe die nachfolgenden Beschreibungspassagen). Bei Informationsweitergabe an ein Löschsystem kann ein Löschvorgang ausgelöst werden (siehe ebenfalls die nachfolgenden Beschreibungspassagen).

Das genannte Löschsystem kann signaltechnisch mit dem erfindungsgemäßen System verbundene sein und Empfangsmittel zum Empfang eines von dem System übermittelten Signals (z. B. Gefahrensignals) aufweisen. Unter Einsatz des Löschsystems können zündwirksame Erscheinungen in dem mediendurchströmten oder medienbeladenen Reservoir bei Empfang des Signals unter Einsatz eines Löschmittels gelöscht werden. Bei Empfang des genannten Signals kann das Löschsystem zur Beseitigung (also zum Löschen) eines Gefahrenzustands aktiviert werden. Zum Löschen der feuerartigen Erscheinung kann von dem Löschsystem ein Löschmittel in das Reservoir eingeleitet werden. Bei dem Löschmittel kann es sich beispielsweise um einen Sprühnebel (aus Wasser oder Löschschaum) handeln.

Weiterhin kann das System eine Warneinheit zur optischen und/oder akustischen Alarmgebung bei Auftreten eines Gefahrenzustands (z. B. in Folge eines kritischen Absorptionsereignisses) umfassen. Es kann also alternativ oder zusätzlich zur Betätigung des Löschsystems vorgesehen sein, dass bei Auftreten eines Gefahrenzustands eine Alarmgebung erfolgt. Die Alarmgebung kann dazu führen, dass in der Nähe des Reservoirs befindliche Personen vor einer möglichen Gefahr gewarnt werden. Weiterhin können in Folge der Alarmgebung Maßnahmen zur Beseitigung des Gefahrenzustands getroffen werden. Zur optischen und/oder akustischen Alarmgebung kann die Warneinheit entsprechende (optische, akustische) Alarmmittel aufweisen. Optische Alarmmittel können beispielsweise Signalleuchten sein, akustische Alarmmittel können beispielsweise Sirenen oder Lautsprecher sein, über welche ein akustisches Alarmsignal ausgegeben werden kann. Das Vorsehen von Alarmmitteln ist vorteilhaft, um in der Umgebung befindliche Personen vor einer etwaigen Gefahr zu warnen oder um Hilfspersonal bzw. Rettungs- oder Löschkräfte zum Ort der Gefahr bzw. des Geschehens hinzuleiten.

Die Warneinheit kann signaltechnisch mit dem erfindungsgemäßen System verbunden oder dessen Bestandteil sein. Ferner kann die Warneinheit Empfangsmittel zum Empfang eines von dem System ausgelösten Gefahrensignals aufweisen.

Bei externer Anordnung des Observationsraums zum Reservoir, kann der Observationsraum beispielsweise in Form einer Küvette oder einer Observationsbox ausgebildet sein. Das Volumen des Observationsraums kann veränderlich sein. Der Observationsraum (z. B. die Küvette) kann mit einem Medium befüllt werden, welches das Absorptionsmedium bereitstellen kann. Dieses kann von einem Kunden (z. B. einem Betreiber einer Anlage mit einem medienbeladenen oder mediendurchströmten Reservoir) zur Untersuchung zur Verfügung gestellt werden. Ausgehend von einer Strahlungsquelle (diese kann zum Beispiel ein geschwärzter Kupferblock sein, der mit einem stufenlos regelbaren Ofen beheizt wird), kann elektromagnetische Strahlung in Richtung des mit dem Medium beladenen/durchströmten Observationsraums ausgestrahlt werden. Die Strahlungsquelle stellt eine zündwirksame Erscheinung in Bezug auf deren Strahlungsemission nach. Die Strahlung tritt durch den Observationsraum hindurch und wird teils vom Medium absorbiert. Ein Teil der Strahlung trifft in durch die Absorption abgeschwächter Intensität auf eine Messanordnung auf und kann dort erfasst werden. Zur Ausblendung von Umgebungslicht kann ein Filter zwischen Strahlungsquelle und Observationsraum eingesetzt werden. Über eine optionale Blende zwischen Strahlungsquelle und Filter kann die von der Strahlungsquelle emittierte Strahlung räumlich begrenzt werden. Mittels eines Choppers (der zwischen Filter und Observationsraum angeordnet sein kann), kann die emittierte Strahlung periodisch abgeschirmt bzw. freigegeben werden. Alternativ kann die Strahlungsquelle moduliert (also periodisch an- und abgeschaltet werden). Auch bei diesem Beispiel kann die Messanordnung durch einen Funkenmelder gebildet sein. Vorzugsweise ist der Observationsraum in zumindest zwei Bereichen transparent für die von der Strahlungsquelle erzeugte elektromagnetische Strahlung, sodass diese in den Observationsraum ein- und aus diesem in Richtung der Messanordnung austreten kann. Es kann vorgesehen sein, dass mit der Strahlungsquelle Strahlung unterschiedlicher Wellenlängen erzeugt wird (z. B. mehreren Wellenlängen innerhalb des ersten und zweiten charakteristischen Wellenlängenbereichs). Sodann kann die bei diesen Wellenlängen vorliegende in der Messanordnung ankommende Strahlungsintensität (oder ein anderweitiger Parameter) erfasst und daraus im Vergleich zu einer Vergleichsmessung mit leerem Observationsraum (ohne darin enthaltenes Medium) ein bei den jeweiligen Wellenlängen vorliegender Absorptionswert ermittelt werden. Die Absorption bei einer bestimmten Wellenlänge kann durch eine Subtraktion der bei dieser Wellenlänge mit der Messanordnung erfassten Strahlungsintensität (mit in dem Observationsraum enthaltenem Absorptionsmedium, z. B. dem Medium) von einer bei dieser Wellenlänge mit der Messanordnung erfassten Strahlungsintensität (ohne in dem Observationsraum enthaltenes Medium) ermittelt werden. Dies kann für zumindest eine (vorzugsweise mehrere) Wellenlängen im ersten charakteristischen Wellenlängenbereich und für zumindest eine Wellenlänge, vorzugsweise zwei oder mehr Wellenlängen, im zweiten charakteristischen Wellenlängenbereich vorgenommen werden. Aus diesen Daten kann eine Absorptionskurve ermittelt und ein Absorptionskoeffizient des Mediums bestimmt werden. Bei dieser Ausgestaltung kann die von zündwirksamen Partikeln emittierte elektromagnetische Strahlung durch die Strahlungsquelle simuliert werden. Anstelle einer wellenlängenselektiven Bestrahlung des in dem Observationsraum enthaltenen Mediums kann die Strahlungsquelle auch breitbandige Strahlung aussenden. Sodann kann die spektrale Selektion durch die Messanordnung, z. B. eine Filtereinrichtung, erfolgen. Die Messanordnung kann auch bei dieser Ausgestaltung ein Funkenmelder sein.

Grundsätzlich sei betont, dass bei Vorsehen eines zum Reservoir externen Observationsraums (z.B. im Sinne einer Observationsbox) mittels einer Strahlungsquelle die Strahlungsemission eines zündwirksamen Partikels simuliert (nachgestellt) werden kann. Die Strahlungsquelle ist derart zu positionieren, dass von dieser abgegebene elektromagnetische Strahlung in den Observationsraum eintreten kann.

Ferner betrifft die vorliegende Erfindung ein Verfahren zur Analyse von in einem medienbeladenen oder mediendurchströmten Reservoir auftretenden zündwirksamen Erscheinungen, wobei in einem Observationsraum eine Absorption von seitens einer zündwirksamen Erscheinung oder einer die zündwirksame Erscheinung nachstellenden Strahlungsquelle emittierter elektromagnetischer Strahlung durch ein Absorptionsmedium beobachtet wird, wobei unter Einsatz einer Messanordnung zumindest ein erster Absorptionswert betreffend die im Observationsraum durch das Absorptionsmedium absorbierte elektromagnetische Strahlung in einem ersten charakteristischen Wellenlängenbereich erfasst wird, wobei unter Einsatz der Messanordnung zumindest ein zweiter Absorptionswert betreffend die im Observationsraum durch das Absorptionsmedium absorbierte elektromagnetische Strahlung in einem zweiten charakteristischen Wellenlängenbereich erfasst wird, wobei der Absorption in dem ersten charakteristischen Wellenlängenbereich ein erstes Absorptions-Charakteristikum zugrunde liegt, und wobei der Absorption in dem zweiten charakteristischen Wellenlängenbereich ein zweites Absorptions-Charakteristikum zugrunde liegt, und wobei unter Einsatz eines Prüfmittels aus dem zumindest einen ersten Absorptionswert und dem zumindest einen zweiten Absorptionswert ein Absorptionsmaß ermittelt wird.

Nach einer vorteilhaften Ausgestaltung der Erfindung kann das Verfahren unter Einsatz eines erfindungsgemäßen Systems ausgeführt werden.

Das Verfahren kann kontinuierlich, in einem vorgegebenen Zeitintervall oder zu manuell vorgegebenen Zeitpunkten ausgeführt werden. Entsprechend ist eine periodische Verfahrensausführung, eine aperiodische Verfahrensführung oder eine bedarfsgesteuerte Verfahrensführung ermöglicht.

Die vorangehend im Zusammenhang eines erfindungsgemäßen Systems beschriebenen Merkmale können ohne Weiteres als vorteilhafte Ausgestaltungsmerkmale eines erfindungsgemäßen Verfahrens verstanden werden.

Ferner kann die vorliegende Erfindung ein Verfahren betreffen, bei dem eine Probe eines zur Beladung/Durchströmung eines Reservoirs vorgesehenen Mediums (z. B.) von einem Kunden bereitgestellt wird. Dazu kann die Probe aus einem bestehenden Reservoir entnommen oder eigens für die Analyse gefertigt werden. Sodann wird diese Probe des Mediums in einen extern zum Reservoir befindlichen Observationsraum (eine Observationsbox) gefüllt. Im Anschluss daran wird das vorangehend beschriebene Analyseverfahren (das Verfahren gemäß dem Anspruch 20) ausgeführt, sprich es wird in dem Observationsraum eine Absorption von seitens einer zündwirksamen Erscheinung oder einer die zündwirksame Erscheinung nachstellenden Strahlungsquelle emittierter elektromagnetischer Strahlung durch ein Absorptionsmedium beobachtet, wobei unter Einsatz einer Messanordnung zumindest ein erster Absorptionswert betreffend die im Observationsraum durch das Absorptionsmedium absorbierte elektromagnetische Strahlung in einem ersten charakteristischen Wellenlängenbereich erfasst wird, wobei unter Einsatz der Messanordnung zumindest ein zweiter Absorptionswert betreffend die im Observationsraum durch das Absorptionsmedium absorbierte elektromagnetische Strahlung in einem zweiten charakteristischen Wellenlängenbereich erfasst wird, wobei der Absorption in dem ersten charakteristischen Wellenlängenbereich ein erstes Absorptions-Charakteristikum zugrunde liegt, und wobei der Absorption in dem zweiten charakteristischen Wellenlängenbereich ein zweites Absorptions-Charakteristikum zugrunde liegt, und wobei unter Einsatz eines Prüfmittels aus dem zumindest einen ersten Absorptionswert und dem zumindest einen zweiten Absorptionswert ein Absorptionsmaß ermittelt wird.

Weitere Merkmale und Vorteile der Erfindung ergeben sich aus der folgenden Beschreibung nicht einschränkend zu verstehender Ausführungsbeispiele der Erfindung, welche im Folgenden unter Bezugnahme auf die Zeichnungen näher erläutert werden. In dieser Zeichnung zeigen schematisch:
- Fig. 1: ein mediendurchströmtes Reservoir mit einer zündwirksamen Erscheinung;
- Fig. 2: eine Illustration des grundlegenden Funktionsprinzips eines Funkenmelders beim Einsatz bei einem mediendurchströmten Reservoirs nach Fig. 1;
- Fig. 3: eine Darstellung eines ersten Ausführungsbeispiels des erfindungsgemäßen Systems beim Einsatz in einem mediendurchströmten Reservoir nach den Figuren 1 oder 2, wobei der dem System zugehörige Observationsraum innerhalb des Reservoirs angeordnet ist;
- Fig. 4: eine Darstellung einer wellenlängenabhängigen Absorptionskurve;
- Fig. 5: eine Darstellung eines zweiten Ausführungsbeispiels des erfindungsgemäßen Systems, wobei der dem System zugehörige Observationsraum extern nicht innerhalb eines Reservoirs, sondern extern zu diesem angeordnet ist;
- Fig. 6: eine Darstellung eines weiteren Ausführungsbeispiels des erfindungsgemäßen Systems, wobei der dem System zugehörige Observationsraum nicht innerhalb eines Reservoirs, sondern extern zu diesem angeordnet ist
- Fig. 7: eine Darstellung experimentell aufgenommener Extinktionskurven dreier unterschiedlicher Stoffe.

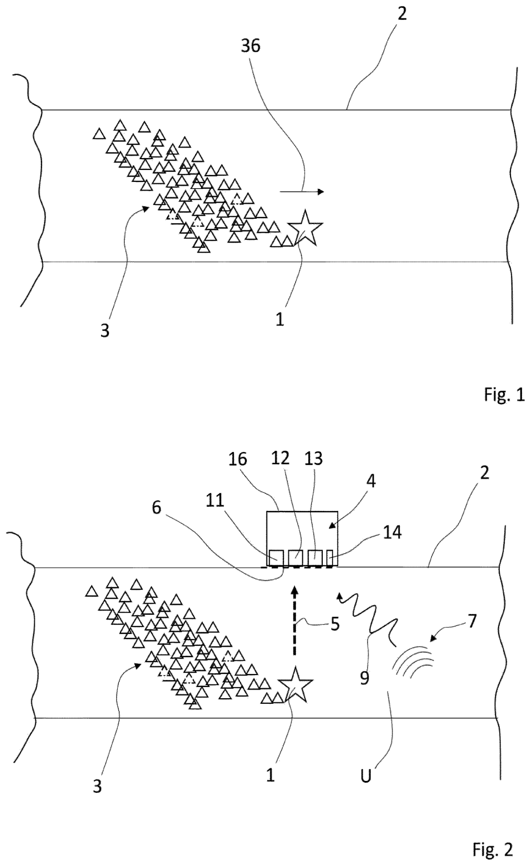

In der Figur 1 ist ein mediendurchströmtes Reservoir 2 als Bestandteil einer übergeordneten Produktions- oder Verarbeitungsanlage in einem der in der einleitenden Beschreibung aufgeführten Industriezweige dargestellt. Das Reservoir 2 ist als Kanal (beispielsweise rohrförmig) ausgebildet, entlang dessen ein Medium 3 befördert wird, nämlich entlang der Förderrichtung 36. Bei dem Medium 3 handelt es sich um einen Feststoff, der - wie anhand der Vielzahl von dargestellten Dreieckformen illustriert - partikelförmig vorliegt. Die Beförderung erfolgt auf Basis der Schwerkraft (z.B. beim Transport in Vertikalrichtung wie in einem Fallrohr), alternativ mechanisch oder pneumatisch vermittelt. Kenntlich gemacht ist ferner, dass in dem mediendurchströmten Reservoir 2 zündwirksame Erscheinungen 1 auftreten können (schematisch illustriert durch eine Sternform). Zündwirksame Erscheinungen 1 können unter bestimmten Umständen als Zündinitiale eines Brandes oder gar einer Explosion wirken. Es sei ausdrücklich betont, dass die Erfindung auch bei einem medienbeladenen Reservoir 2 eingesetzt werden kann. Die hier gezeigte Darstellung eines mediendurchströmten Reservoirs 2 dient der Illustration des Erfindungsgedankens.

Um derartige zündwirksame Erscheinungen 1 frühzeitig zu erkennen und den entsprechenden Folgen entgegenzuwirken, kann auf Funkenmelder 4 zurückgegriffen werden. Figur 2 illustriert das grundlegende Funktionsprinzip eines solchen Funkenmelders 4. Wie dort zu erkennen, umfasst der Funkenmelder 4 ein Sensorgehäuse 16 in welchem eine erste, zweite und dritte Messeinheit 11, 12, 13 sowie eine optionale Sensoreinheit 14 angeordnet ist. Die erste Messeinheit 11 ist dabei zur Erfassung von seitens der zündwirksamen Erscheinung 1 abgegebener elektromagnetischer Strahlung 5 (illustriert durch einen gestrichelten Pfeil) in einem ersten Wellenlängenbereich ausgebildet. Der erste Wellenlängenbereich erstreckt sich von 190 nm - 1100 nm, und bevorzugt von 430 nm - 1100 nm, wobei das Messempfindlichkeits-Optimum der ersten Messeinheit 11 in einem Wellenlängenbereich von ungefähr 780 nm, vorzugsweise genau bei 780 nm liegt. Die zweite Messeinheit 12 ist zur Erfassung von seitens der zündwirksamen Erscheinung 1 abgegebener elektromagnetischer Strahlung 5 in einem zweiten Wellenlängenbereich ausgebildet. Der zweite Wellenlängenbereich liegt bei 1000 nm - 3100 nm, und erstreckt sich bevorzugt von 1650 nm - 3100 nm. Damit ist der zweite Wellenlängenbereich in einem langwelligeren Spektralbereich angesiedelt.

Die dritte Messeinheit 13 ist hingegen zur Erfassung elektromagnetischer Strahlung 9 von Umgebungslicht 7 in einem Wellenlängenbereich von 400 nm - 700 nm eingerichtet. Umgebungslicht 7 kann in das Reservoir 2 (bzw. den Kanal) eintreten durch Öffnungen im Reservoir oder eines zugehörigen Kanalsystems. Auch Maschinen- oder Anlagenkomponenten kann eine Lichterzeugung ausgehen, die in dem Reservoir 2 für ein Hintergrundlicht bzw. Umgebungslicht 7 sorgt. Ferner ist im Bereich der an einer Wandung des Reservoirs 2 platzierten Vorrichtung bzw. Sensoranordnung 4 eine (zumindest teilweise) optisch transparente Einrichtung 6 vorgesehen, z.B. ein Fenster, durch welches Strahlung bestimmter Wellenlängen oder bestimmter Wellenlängenbereiche hindurchtreten kann. In diesem Falle kann gegebenenfalls auch Umgebungslicht von außen durch die Einrichtung 6 in den Innenraum des Reservoirs 2 eindringen.

Die optional in dem Funkenmelder 4 vorgesehene Sensoreinheit 14 ist dazu eingerichtet, Medien-spezifische oder Umgebungs-spezifische Messdaten zu erfassen, beispielsweise einen Druck, eine Dichte, eine Temperatur, einen Feuchtigkeitswert, eine Partikelkonzentration oder eine Gaskonzentration des Mediums 3 oder der Umgebung U des Mediums 3. Diese mit der Sensoreinheit 14 erfassbaren Messdaten werden gegebenenfalls bei der Gefahrenbewertung einer mit den Messeinheiten 11, 12 erfassten zündwirksamen Erscheinung 1 mitberücksichtigt. Gleichsam wird gegebenenfalls auch die Präsenz von mit der dritten Messeinheit 13 erfassbarem Umgebungslicht 7 bei der Gefahrenbewertung mit einbezogen. Ein Funkenmelder 4 kann auch anderweitig ausgestaltet sein und beispielsweise nur eine oder zwei der genannten Messeinheiten umfassen. Der hier beschriebene Aufbau des Funkenmelders 4 ist exemplarischer Natur.

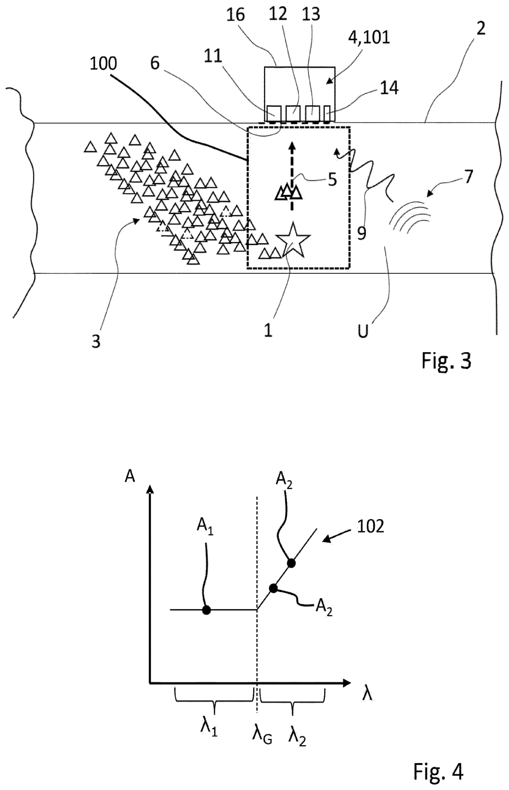

Figur 3 zeigt ferner ein erstes Ausführungsbeispiel eines Systems nach der Erfindung. Das System ist zur Analyse von in einem medienbeladenen oder mediendurchströmten Reservoir 2 auftretenden zündwirksamen Erscheinungen 1 ausgebildet. Das System sei vorliegend am Beispiel eines mediendurchströmten Reservoirs 2 erläutert, ist aber ohne Weiteres auch bei einem medienbeladenen Reservoir 2 einsetzbar.

Das System umfasst einen Observationsraum 100, in welchem eine Absorption von seitens einer zündwirksamen Erscheinung 1 emittierter elektromagnetischer Strahlung 5 durch ein Absorptionsmedium beobachtbar ist. Das Absorptionsmedium ist im vorliegenden Fall das Medium 3. Bei dem Observationsraum 100 handelt es sich gemäß diesem Ausführungsbeispiel um ein Volumenelement in dem mediendurchströmten Reservoir 2. Das System umfasst ferner eine Messanordnung 101, welche dazu ausgebildet und derart angeordnet ist, zumindest einen ersten Absorptionswert A₁ betreffend die im Observationsraum 100 durch das Absorptionsmedium absorbierte elektromagnetische Strahlung 5 in einem ersten charakteristischen Wellenlängenbereich λ₁ zu erfassen. Dies kann mit einem ersten Erfassungsmittel 201 erfolgen. Die Strahlungsabsorption durch das Medium 3 (welches vorliegend das Absorptionsmedium bereitstellt) ist in der Figur 3 durch drei Dreiecke gekennzeichnet, welche den die elektromagnetische Strahlung 5 repräsentierenden Pfeil kreuzen. Eine solche Strahlungsabsorption führt zur Abschwächung (Attenuierung) der über die Messanordnung 101 detektierbaren Signalintensität. Die Messanordnung 101 ist ferner dazu ausgebildet und derart angeordnet, zumindest einen zweiten Absorptionswert A₂ betreffend die im Observationsraum 100 durch das Absorptionsmedium absorbierte elektromagnetische Strahlung 5 in einem zweiten charakteristischen Wellenlängenbereich λ₂ zu erfassen. Dies kann mit einem zweiten Erfassungsmittel 202 erfolgen. Vorteilhaft ist eine Erfassung mehrerer zweiter Absorptionswerte A₂. Das System umfasst ferner ein Prüfmittel (nicht dargestellt), welches dazu eingerichtet ist, aus dem zumindest einen ersten Absorptionswert A₁ und dem zumindest einen zweiten Absorptionswert A₂ ein Absorptionsmaß zu ermitteln. Im Falle, dass der Funkenmelder 4 die Messanordnung 101 bereitstellt, kann die erste Messeinheit 11 als erstes Erfassungsmittel angesehen werden. Die zweite Messeinheit 12 kann sodann als zweites Erfassungsmittel angesehen werden.

Der Absorption in dem ersten charakteristischen Wellenlängenbereich λ₁ liegt ein erstes Absorptions-Charakteristikum zugrunde, wobei der Absorption in dem zweiten charakteristischen Wellenlängenbereich λ₂ ein zweites Absorptions-Charakteristikum zugrunde liegt. Gezeigt ist dieser Zusammenhang in jener in Figur 4 (stark schematisiert) wiedergegebenen Absorptionskurve 102 für ein bestimmtes Absorptionsmedium. Auf der y-Achse ist dabei die Absorption (einheitenlos) gegen die Wellenlänge λ (auf der x-Achse) aufgetragen. Von der Anmelderin wurde beobachtet, dass das Absorptionsverhalten wellenlängenabhängig ist. So unterteilt sich die Absorptionskurve in einen ersten charakteristischen Wellenlängenbereich λ₁ bei niedrigeren Wellenlängen und einen zweiten charakteristischen Wellenlängenbereich λ₂ bei höheren Wellenlängen. Die Wellenlängenbereiche λ₁, λ₂ sind von einer Grenzwellenlänge λ_{G} getrennt. Das erste Absorptions-Charakteristikum bezieht sich auf die Absorptionskurve 102 im ersten charakteristischen Wellenlängenbereich λ₁. Wie dargestellt, weist die Absorptionskurve 102 im ersten charakteristischen Wellenlängenbereich λ₁ ein Plateau auf, d. h. die Steigung ist gleich Null. Die Plateauform der Absorptionskurve 102 stellt das erste Absorptions-Charakteristikum dar. Das zweite Absorptions-Charakteristikum bezieht sich auf die Absorptionskurve 102 im zweiten charakteristischen Wellenlängenbereich λ₂. Dort weist die Absorptionskurve 102 einen Linearanstieg auf. Auch kann die Absorptionskurve im zweiten charakteristischen Wellenlängenbereich λ₂ eine von einer konstanten Steigung abweichende (variierende) Steigung aufweisen. Auch dies kann im Gegensatz zum Plateau der Absorptionskurve 102 im ersten charakteristischen Wellenlängenbereich λ₁ ein Indikator für das zweite Absorptions-Charakteristikum sein.

Das erwähnte Prüfmittel ist dazu eingerichtet, auf Basis des zumindest einen ersten Absorptionswerts A₁ und des zumindest einen zweiten Absorptionswerts A₂ die genannte Absorptionskurve 102 zu ermitteln. Der Ermittlung der Absorptionskurve 102 kann eine Näherungsannahme zugrunde gelegt werden, wonach die ersten Absorptionswerte A₁ in dem ersten charakteristischen Wellenlängenbereich λ₁ konstant sind, d.h. bei verschiedenen Wellenlängen λ (innerhalb des ersten charakteristischen Wellenlängenbereichs λ₁) konstante Werte annehmen. In dem zweiten charakteristischen Wellenlängenbereich λ₂ hingegen kann angenommen werden, dass die Absorptionskurve 102 (also den zweiten Absorptionswerten A₂) eine konstante (wellenlängenbezogene) Steigung aufweist. Schon bei Kenntnis eines einzigen ersten Absorptionswerts A₁ und zweier zweiter Absorptionswerte A₂ lässt sich durch entsprechende Extrapolation eine Näherungs-Absorptionskurve erstellen. Auch die Kenntnis eines ersten Absorptionswerts A₁, eines zweiten Absorptionswerts A₂ sowie der Grenzwellenlänge λ₂ lässt sich die Absorptionskurve 102 ermitteln. Die Grenzwellenlänge λ₂ und/oder eine Anzahl zweiter Absorptionswerte können experimentell ermittelt werden oder literaturbekannt sein. Je mehr erste und zweite Absorptionswerte A₁, A₂ ermittelt werden, umso präziser ist die ermittelte Absorptionskurve 102. Aus der Steigung der Absorptionskurve 102 im zweiten charakteristischen Wellenlängenbereich λ₂ lässt sich ein Absorptionskoeffizient des Absorptionsmediums ermitteln.

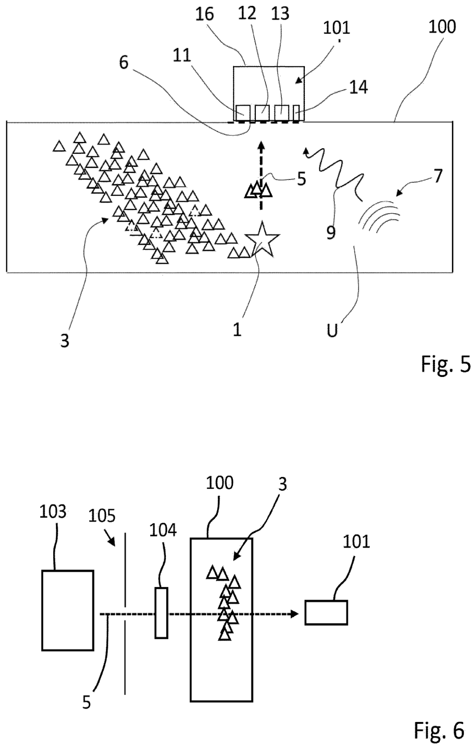

Im Ausführungsbeispiel nach Fig. 5 ist der Observationsraum 100 extern zum Reservoir 2 angeordnet und bildet eine Observationsbox, sodass jene in dem Reservoir vorliegenden Bedingungen im Labormaßstab nachgestellt werden können. In diesem Fall ist der Observationsraum 100 eine Box (zur Nachstellung einer statischen Beladung eines Reservoirs 2), die mit einem Absorptionsmedium (hier dem Medium 3) gefüllt ist. Gleichsam kann der Observationsraum 100 nach Art eines Strömungskanals ausgebildet sein, um mediendurchströmte Reservoirs 2 im Labormaßstab nachstellen zu können. Der Observationsraum 100 weist eine optisch transparente Einrichtung 6 (z. B. ein Fenster auf), durch welche die seitens der zündwirksamen Erscheinung 1 emittierte elektromagnetische Strahlung 5 in Richtung einer Messanordnung 101 hindurchtreten kann. Die Messanordnung 101 bildet mit der Observationsbox eine Analysebox. Die Messanordnung 101 ist dazu an der Observationsbox befestigt. Die Messanordnung 101 kann - muss aber nicht - ein Funkenmelder 4 sein.

Das erwähnte Prüfmittel kann in beiden Ausführungsbeispielen der Figuren 3 und 5 in die Messanordnung 101 integriert sein. Gleichsam kann das Prüfmittel extern zu der Messanordnung 101 angeordnet und datenkommunikationstechnisch mit der Messanordnung 101 verbunden sein.

Die Figur 6 zeigt einen alternatives Ausführungsbeispiel für eine extern zu einem Reservoir 2 angeordnete Observationsbox. Dabei kann jener die Observationsbox ausbildender Observationsraum 100 beispielsweise in Form einer Küvette ausgebildet sein. Der Observationsraum 100 (z. B. die Küvette) ist mit einem Medium 3 befüllt, welches das Absorptionsmedium bereitstellt. Dieses kann von einem Kunden (z. B. einem Betreiber einer Anlage mit einem medienbeladenen oder mediendurchströmten Reservoir) zur Untersuchung zur Verfügung gestellt werden. Ausgehend von einer Strahlungsquelle 103 (diese kann zum Beispiel ein geschwärzter Kupferblock sein, der mit einem stufenlos regelbaren Ofen beheizt wird), wird elektromagnetische Strahlung 5 in Richtung des Observationsraums 100 ausgestrahlt. Die Strahlung 5 tritt durch den Observationsraum 100 hindurch und wird teils vom Medium 3 absorbiert. Ein Teil der Strahlung trifft in durch die Absorption abgeschwächter Intensität auf die Messanordnung 101 auf und kann dort erfasst werden. Zur Ausblendung von Umgebungslicht kann ein Filter 104 eingesetzt werden. Über eine optionale Blende 105 kann die von der Strahlungsquelle 103 emittierte Strahlung räumlich begrenzt werden. Mittels eines Choppers (der zwischen Filter 104 und Observationsraum 100 angeordnet sein kann), kann die emittierte Strahlung periodisch abgeschirmt bzw. freigegeben werden. Auch bei diesem Beispiel kann die Messanordnung 101 durch einen Funkenmelder gebildet sein.

Sowohl beim Ausführungsbeispiel nach Fig. 5 als auch beim Ausführungsbeispiel nach Fig. 6 kann der Observationsraum 100 ein veränderliches Volumen aufweisen, sodass das Probenvolumen flexibel justiert werden kann. In beiden Ausführungsbeispielen kann der Observationsraum 100 vollständig oder teilweise transparent für elektromagnetische Strahlung 5 sein. Eine nur teilweise transparente Ausbildung (nur in jenen Bereichen in denen Strahlung in den Observationsraum 100 ein- und/oder austreten muss) ist vorteilhaft, um Fremdlicht- oder Umgebungslichteinflüsse zu verringern.

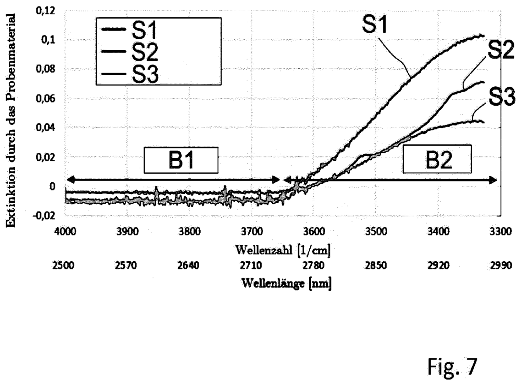

Fig. 7 zeigt die in Fig. 4 abstrakt und schematisiert dargestellte Absorptionskurve anhand von experimentell ermittelten Extinktionskurven für unterschiedliche Stoffe S1 (Kakaopulver), S2 (Milchpulver) und S3 (Holzstaub). Wie schon in der Figur 4 illustriert, weist auch die in Fig. 7 experimentell ermittelte Kurve in einem Bereich B1 (erster charakteristischer Wellenlängenbereich) eine konstante Absorption (hier Extinktion) auf, während in einem Bereich B2 näherungsweise ein konstanter Anstieg der Extinktion feststellbar ist. Im Bereich B1 ist die Absorption/Extinktion unabhängig von der Wellenlänge, während die Absorption/Extinktion im Bereich B2 wellenlängenabhängig ist.

### Bezugszeichenliste

- 1: zündwirksame Erscheinung
- 2: Reservoir
- 3: Medium
- 4: Funkenmelder
- 5: elektromagnetische Strahlung
- 6: optisch transparente Einrichtung
- 7: Umgebungslicht
- 9: elektromagnetische Strahlung (Umgebungslicht)
- 11: erste Messeinheit
- 12: zweite Messeinheit
- 13: dritte Messeinheit
- 14: Sensoreinheit
- 16: Sensorgehäuse
- 30: Alarmsystem
- 31: Flamme
- 36: Förderrichtung
- 100: Observationsraum
- 101: Messanordnung
- 102: Absorptionskurve
- 103: Strahlungsquelle
- 104: Filter
- 201: erstes Erfassungsmittel
- 202: zweites Erfassungsmittel
- A₁: erster Absorptionswert
- A₂: zweiter Absorptionswert
- B1: Bereich
- B2: Bereich
- S1: Kakaopulver
- S2: Milchpulver
- S3: Holzstaub
- λ₁: erster charakteristischer Wellenlängenbereich
- λ₂: zweiter charakteristischer Wellenlängenbereich
- λ_{G}: Grenzwellenlänge
- U: Umgebung

## Patentansprüche

1. System zur Analyse von in einem medienbeladenen oder mediendurchströmten Reservoir (2) auftretenden zündwirksamen Erscheinungen (1), umfassend
- einen Observationsraum (100), in welchem eine Absorption von seitens einer zündwirksamen Erscheinung (1) oder einer die zündwirksame Erscheinung (1) nachstellenden Strahlungsquelle (103) emittierter elektromagnetischer Strahlung (5) durch ein Absorptionsmedium beobachtbar ist,
- eine Messanordnung (101), welche dazu ausgebildet und derart angeordnet ist,
∘ zumindest einen ersten Absorptionswert (A₁) betreffend die im Observationsraum (100) durch das Absorptionsmedium absorbierte elektromagnetische Strahlung (5) in einem ersten charakteristischen Wellenlängenbereich (λ₁) zu erfassen,
∘ und zumindest einen zweiten Absorptionswert (A₂) betreffend die im Observationsraum (100) durch das Absorptionsmedium absorbierte elektromagnetische Strahlung (5) in einem zweiten charakteristischen Wellenlängenbereich (λ₂) zu erfassen,
wobei der Absorption in dem ersten charakteristischen Wellenlängenbereich (λ₁) ein erstes Absorptions-Charakteristikum zugrunde liegt, und wobei der Absorption in dem zweiten charakteristischen Wellenlängenbereich (λ₂) ein zweites Absorptions-Charakteristikum zugrunde liegt,
- ein Prüfmittel, welches dazu eingerichtet ist, aus dem zumindest einen ersten Absorptionswert (A₁) und dem zumindest einen zweiten Absorptionswert (A₂) ein Absorptionsmaß zu ermitteln.

2. System nach Anspruch 1, wobei sowohl der erste charakteristische Wellenlängenbereich (λ₁) als auch der zweite charakteristische Wellenlängenbereich (λ₂) innerhalb eines Wellenlängenbereichs von 100 nm
- 3500 nm liegt, wobei der erste charakteristische Wellenlängenbereich (λ₁) und der zweite charakteristische Wellenlängenbereich (λ₂) vorzugsweise nicht überlappen und vorzugsweise von einer Grenzwellenlänge (λ_{G}) oder einem Grenzwellenlängenbereich getrennt sind.

3. System nach Anspruch 1 oder 2, wobei die Messanordnung (101) ein erstes Erfassungsmittel (201) aufweist, welches dazu eingerichtet ist, den zumindest einen ersten Absorptionswert (A₁) in dem ersten charakteristischen Wellenlängenbereich (λ₁) zu erfassen, und wobei die Messanordnung (101) ein zweites Erfassungsmittel (202) aufweist, welches dazu eingerichtet ist, den zumindest einen zweiten Absorptionswert (A₂) in dem zweiten charakteristischen Wellenlängenbereich (A₂) zu erfassen.

4. System nach Anspruch 1 oder 2, wobei die Messanordnung (101) ein einziges Erfassungsmittel aufweist, welches dazu eingerichtet ist, den zumindest einen ersten Absorptionswert (A₁) in dem ersten charakteristischen Wellenlängenbereich (λ₁) zu erfassen und den zumindest einen zweiten Absorptionswert (A₂) in dem zweiten charakteristischen Wellenlängenbereich (λ₁) zu erfassen.

5. System nach Anspruch 4, wobei die Messanordnung (101) eine Filtereinrichtung umfasst, die dazu eingerichtet ist, einen ersten spektralen Filterzustand und einen zweiten spektralen Filterzustand bereitzustellen, wobei in dem ersten spektralen Filterzustand eine Erfassung des zumindest einen ersten Absorptionswerts (A₁) in dem ersten charakteristischen Wellenlängenbereich (λ₁) durch das Erfassungsmittel ermöglicht ist, und wobei in dem zweiten spektralen Filterzustand eine Erfassung des zumindest einen zweiten Absorptionswerts (A₂) in dem zweiten charakteristischen Wellenlängenbereich (λ₂) durch das Erfassungsmittel ermöglicht ist.

6. System nach Anspruch 4, wobei die Messanordnung (101) eine Filtereinrichtung, insbesondere einen Wechselfilter, umfasst, die dazu eingerichtet ist, eine Anzahl von > 2 spektralen Filterzuständen bereitzustellen, wobei in einem jeweiligen spektralen Filterzustand eine Erfassung zumindest eines ersten Absorptionswerts (A₁) respektive zumindest eines zweiten Absorptionswerts (A₂) durch das Erfassungsmittel in Sub-Wellenlängenbereichen des ersten respektive zweiten charakteristischen Wellenlängenbereichs (λ₁, λ₂) ermöglicht ist.

7. System nach einem der vorangehenden Ansprüche, wobei die Messanordnung (101) Bestandteil eines Funkenmelders (4) ist, und wobei die Messanordnung (101) ein in dem Funkenmelder (4) integriertes Absorptionsspektrometer bereitstellt.

8. System nach einem der vorangehenden Ansprüche, wobei der Observationsraum (100) innerhalb des Reservoirs (2) angeordnet ist und ein Volumenelement des Reservoirs (2) bildet.

9. System nach einem der Ansprüche 1 bis 7, wobei der Observationsraum (100) extern zum Reservoir (2) angeordnet ist und eine Observationsbox bildet.

10. System nach Anspruch 9, wobei die Observationsbox in Verbindung mit der Messanordnung (101) eine Analysebox bildet.

11. System nach einem der vorangehenden Ansprüche, wobei das Prüfmittel eine Datenverarbeitungseinheit umfasst, und wobei das Prüfmittel datenkommunikationstechnisch mit der Messanordnung (101) verbunden ist.

12. System nach einem der vorangehenden Ansprüche, **dadurch gekennzeichnet, dass** das Prüfmittel dazu eingerichtet ist, auf Basis des zumindest einen ersten Absorptionswerts (A₁) und des zumindest einen zweiten Absorptionswerts (A₂) eine Absorptionskurve (102) zu ermitteln.

13. System nach einem der vorangehenden Ansprüche, wobei das erste Absorptions-Charakteristikum ein Charakteristikum in Bezug auf eine wellenlängenabhängige Absorptionskurve (102) in dem ersten charakteristischen Wellenlängenbereich (λ₁) ist.

14. System nach einem der vorangehenden Ansprüche 1 bis 12, wobei das zweite Absorptions-Charakteristikum ein Charakteristikum in Bezug auf eine wellenlängenabhängige Absorptionskurve (102) in dem zweiten charakteristischen Wellenlängenbereich (λ₂) ist.

15. System nach Anspruch 13, wobei das erste Absorptions-Charakteristikum eine im Wesentlichen als Plateau ausgebildete wellenlängenabhängige Absorptionskurve (102) in dem ersten charakteristischen Wellenlängenbereich (λ₁) ist.

16. System nach Anspruch 14, wobei das zweite Absorptions-Charakteristikum im Wesentlichen ein Linearanstieg der wellenlängenabhängigen Absorptionskurve (102) in dem zweiten charakteristischen Wellenlängenbereich (λ₂) ist.

17. System nach Anspruch 16, wobei das Prüfmittel dazu eingerichtet ist, auf Basis des Linearanstiegs einen Absorptionskoeffizienten als Absorptionsmaß zu ermitteln.

18. System nach Anspruch 17, wobei das Prüfmittel dazu eingerichtet ist, das ermittelte Absorptionsmaß mit einem vorgegebenen Absorptionsmaß zu vergleichen und im Falle eines über in Bezug zum vorgegebenen Absorptionsmaß über ein vorbestimmtes Maß hinausgehendes ermitteltes Absorptionsmaß eine Information betreffend ein kritisches Absorptionsereignis, insbesondere an eine Warneinheit, den Funkenmelder (4) oder ein Löschsystem, auszugeben.

19. System nach Anspruch 18, wobei der Funkenmelder dazu eingerichtet ist, in Folge eines Erhalts der Information betreffend das kritische Absorptionsereignis eine Empfindlichkeitsanpassung der Messanordnung (101) und/oder einer oder mehrerer weiterer Messeinheiten vorzunehmen.

20. Verfahren zur Analyse von in einem medienbeladenen oder mediendurchströmten Reservoir (2) auftretenden zündwirksamen Erscheinungen (1), wobei in einem Observationsraum (100) eine Absorption von seitens einer zündwirksamen Erscheinung (1) oder einer die zündwirksame Erscheinung (1) nachstellenden Strahlungsquelle (103) emittierter elektromagnetischer Strahlung (5) durch ein Absorptionsmedium beobachtet wird, wobei unter Einsatz einer Messanordnung (101) zumindest ein erster Absorptionswert (A₁) betreffend die im Observationsraum (100) durch das Absorptionsmedium absorbierte elektromagnetische Strahlung (5) in einem ersten charakteristischen Wellenlängenbereich (λ₁) erfasst wird, wobei unter Einsatz der Messanordnung (101) zumindest ein zweiter Absorptionswert (A₂) betreffend die im Observationsraum (100) durch das Absorptionsmedium absorbierte elektromagnetische Strahlung (5) in einem zweiten charakteristischen Wellenlängenbereich (λ₂) erfasst wird, wobei der Absorption in dem ersten charakteristischen Wellenlängenbereich (λ₁) ein erstes Absorptions-Charakteristikum zugrunde liegt, und wobei der Absorption in dem zweiten charakteristischen Wellenlängenbereich (λ₂) ein zweites Absorptions-Charakteristikum zugrunde liegt, und wobei unter Einsatz eines Prüfmittels aus dem zumindest einen ersten Absorptionswert (A₁) und dem zumindest einen zweiten Absorptionswert (A₂) ein Absorptionsmaß ermittelt wird.

21. Verfahren nach Anspruch 20, wobei das Verfahren unter Einsatz eines Systems nach einem der Ansprüche 1 bis 19 ausgeführt wird.
